# EUROPÄISCHE PATENTSCHRIFT

(11) **EP 2 507 455 B1**
(45) Veröffentlichungstag und Bekanntmachung des Hinweises auf die Patenterteilung: **14.10.2015**
(21) Anmeldenummer: 10784716.2
(22) Anmeldetag: 30.11.2010
(51) Int. Cl.: E05F 3/22, E05F 3/10

(54) **TÜRSCHLIESSER MIT NOCKENTRIEB**
DOOR CLOSER COMPRISING CAM DRIVE
FERME-PORTE POURVU D'UN ENTRAINEMENT A CAME

(30) Priorität: 01.12.2009 DE 102009056265; 01.04.2010 DE 102010013853
(43) Veröffentlichungstag der Anmeldung: 10.10.2012
(73) Patentinhaber: DORMA Deutschland GmbH, 58256 Ennepetal (DE)
(72) Erfinder: BIENEK, Volker, 44134 Dortmund (DE); WIEMANN, Sabine, Ennepetal 58256 (DE); PABST, Thomas, 58332 Schwelm (DE)
(74) Vertreter: Balder IP Law, S.L.
(86) Internationale Anmeldenummer: PCT/EP2010/007248
(87) Internationale Veröffentlichungsnummer: WO 2011/066941

(56) Entgegenhaltungen:
- WO-A1-2006/066660
- WO-A1-2006/066663
- DE-A1-102004 041 358
- DE-A1-102005 047 339
- DE-C1- 3 423 242

## Beschreibung

Die Erfindung betrifft einen Türschließer mit Nockentrieb, und insbesondere einen Türschließer mit einer spielfreien Kolbenbaugruppe.

Der Stand der Technik unterscheidet zwischen Türschließern und Türantrieben. Bei Türschließern muss die Tür von einer Person manuell geöffnet werden. Während des Öffnungsvorgangs wird Energie, beispielsweise in einer Schließerfeder, gespeichert und der Türschließer kann die Tür selbstständig durch die gespeicherte Energie wieder schließen. Im Gegensatz dazu ist der Türantrieb eine Anordnung, die mittels zusätzlicher Hilfsenergie, zum Beispiel mittels Elektromotor und Hydraulik, die Tür automatisch öffnet und wieder schließt. Insbesondere bei der Betrachtung der Hydraulikkreisläufe in Türantrieben und Türschließern stellt man signifikante Unterschiede fest. Bei elektrohydraulisch arbeitenden Türantrieben sind stets ein Motor und eine Pumpe vorhanden, die den erforderlichen Hydraulikdruck aufbringen. Die entsprechenden Druckkammern werden dann aktiv mit Hydraulikdruck beaufschlagt, wodurch das Öffnen der Tür bewirkt wird. Der Druck wird somit im Türantrieb von den internen Komponenten, Motor und Pumpe, erzeugt. Im Gegensatz dazu füllen sich Druckkammern in einem Türschließer durch Expansion der Kammern und durch Ansaugen des Hydrauliköls aus anderen Räumen des Türschließers. Hier wird durch Öffnen der Tür die Energie für die Schließerfeder und für den Druckaufbau in den Türschließer eingebracht. Die Kraft- und Momentenverläufe sowie die auftretenden Belastungen sind infolgedessen bei einem Türschließer und bei einem Türantrieb unterschiedlich. Der Türantrieb muss die Energie für die Beschleunigung der Tür in Öffnungsrichtung zusätzlich aufbringen, während die Tür beim Türschließer in Öffnungsrichtung vom Benutzer beschleunigt wird.

DE 10 2005 047 339 A1 zeigt einen Türschließer gemäß dem Oberbegriff des Anspruchs 1.

WO 2006/066660 A1 zeigt einen Türantrieb, insbesondere Drehtürantrieb, mit einer Antriebseinheit, die über eine Ausgangswelle mit der Tür koppelbar und in einem Gehäuse angeordnet ist, mit einem Motor, der mit der Antriebseinheit in Antriebsverbindung steht und mit einem im Gehäuse angeordneten Federkraftspeicher, der mit dem Motor und der Antriebseinheit gekoppelt ist, wobei eine Hydraulikpumpe vorgesehen ist, die mit einem Motor antriebsverbunden ist und die mit einem ein Tankvolumen darstellenden Hydraulikraum und einem dem Federkraftspeicher zugeordneten separaten Druckraum in Hydraulikverbindung steht, und dass die Antriebseinheit als Nockenantrieb mit einem Laschenwagen ausgebildet ist, der im Bereich des größten Durchmessers des Aufnahmeraumes des Gebäudes für die Antriebseinheit um die Ausgangswelle herum angeordnet ist.

WO 2006/066663 A1 zeigt einen Türantrieb, insbesondere Drehtürantrieb, mit einer Antriebseinheit, die über eine Ausgangswelle mit der Tür koppelbar und in einem Gehäuse angeordnet ist, mit einem Motor, der mit der Antriebseinheit in Antriebsverbindung steht und mit einem im Gehäuse angeordneten Federkraftspeicher, der mit dem Motor und der Antriebseinheit gekoppelt ist, wobei eine Hydraulikpumpe vorgesehen ist, die mit dem Motor antriebsverbunden und die mit einem der Antriebseinheit zugeordneten Druckraum und einem dem Federkraftspeicher zugeordneten separaten Druckraum in Hydraulikverbindung steht.

DE 3423242 C1 zeigt einen selbstständigen Türschließer. Der Türschließer weist eine im Schließsinn belastbare Schließerwelle auf, die den verschiebbaren Kolben einer Dämpfungszwecken dienenden hydraulischen Kolben-Zylinder-Einheit führt. Der Druckraum der Kolben-Zylinder-Einheit ist mit dem drucklosen Raum einerseits über ein zum Druckraum hin öffnendes Rückschlagventil verbunden, wobei zwischen den Kolben und die Federanordnung ein eigenbewegliches Stützglied geschaltet ist. Dieses Stützglied ist durch Fremdenergie im Sinne einer Federvorspannung in Abhängigkeit von der Türbetätigung gesteuert antreibbar. Um jedoch zur Vermeidung von Unfällen dem Türbenutzer ständig anzuzeigen, dass der von ihm betätigte Türflügel einen Türschließer besitzt, ist der Dämpfungskolben von einem zweiten, eine geringere Kraft als die Federanordnung äußernden Kraftspeicher ständig im Schließsinn belastet.

Es ist Aufgabe vorliegender Erfindung, einen Türschließer bereitzustellen, der bei kostengünstiger Herstellung sehr schmal aufgebaut ist und somit auch als integrierbarer Türschließer in beispielsweise einer Zarge oder einer Tür Verwendung findet.

Die Aufgabe wird gelöst durch die Merkmale des unabhängigen Anspruchs. Die abhängigen Ansprüche haben vorteilhafte Weiterbildungen der Erfindung zum Gegenstand.

Somit wird die Aufgabe gelöst durch einen Türschließer, insbesondere Drehtürschließer, umfassend ein Türschließergehäuse, eine mit einer Tür verbindbare Abtriebswelle, eine mit der Abtriebswelle verbundene und im Türschließergehäuse geführte Kolbenbaugruppe, eine Schließerfeder, eine zur Verbindung der Kolbenbaugruppe mit der Schließerfeder angeordnete Kolbenstange, eine Freilaufanordnung, welche dazu ausgebildet ist, eine translatorische Bewegung der Kolbenbaugruppe entkoppelt von der Schließerfeder bei blockierter Schließerfeder zu ermöglichen, wobei die Freilaufanordnung als Verschiebekupplung ausgebildet ist, welche ausschließlich Druckkräfte zwischen der Schließerfeder und der Kolbenbaugruppe überträgt, und einen zum Blockieren der Schließerfeder ausgebildeten hydraulischen Sperrraum, wobei die Abtriebswelle eine nockenförmige Abwälzkontur, insbesondere Nockenscheibe, und die Kolbenbaugruppe zumindest zwei auf der Abwälzkontur anliegende Kurvenrollen umfasst, der dadurch gekennzeichnet ist, dass die Kolbenbaugruppe einen Dämpfungskolben mit einer ersten Kurvenrolle und einen Öffnungskolben mit einer zweiten Kurvenrolle umfasst, wobei die Abtriebswelle zwischen dem Dämpfungskolben und dem Öffnungskolben angeordnet ist, und wobei der Dämpfungskolben und der Öffnungskolben über vier Zugstangen miteinander verbunden sind.

Türschließer mit Gleitschienengestänge haben sich aus optischen Gründen in den letzten Jahren immer mehr durchgesetzt. Um gleichzeitig einen komfortablen Bedienungskomfort zu erreichen, d.h., ein mit zunehmendem Türwinkel abfallenden Öffnungswiderstand bzw. abfallendes Öffnungsmoment, wird für den erfindungsgemäßen Türschließer bevorzugt innerhalb des Türschließermechanismus die Nockentechnologie eingesetzt, um die Kraft zwischen der Kolbenbaugruppe und der Abtriebswelle zu übertragen.

Bevorzugt kommt der Türschließer mit Freilauffunktion in Einrichtungen für körperbehinderte Menschen, Seniorenwohnungen oder Kindergärten sowie zur Absicherung an Brandschutztüren zum Einsatz. In Kombination mit einer Brandmeldeanlage wird die Schließung dieser Türen zur Vermeidung von Rauch-und Feuerausbreitung abgesichert, ohne den Türnutzern ein ständiges Öffnungsmoment herkömmlicher Türschließer zumuten zu müssen. Insbesondere bei Brandschutztüren müssen sehr starke Schließerfedern eingesetzt werden, sodass auch bei einem Luftzug in Gängen ein sicheres Schließen der Tür sichergestellt werden kann. Das Spannen dieser Schließerfedern bei jedem Öffnen der Tür ist insbesondere Kindern, kranken Menschen und Senioren nicht zuzumuten. Die Freilauffunktion ermöglicht hier, dass die Schließerfeder nur einmalig vorgespannt wird und bis zum etwaigen Brandfall vorgespannt bleibt. Der vorgestellte Türschließer kann aufgrund der sehr schmalen Baubreite unsichtbar im Türblatt oder in der Zarge eingesetzt werden, was keinerlei optische Beeinträchtigung mit sich bringt und vor Beschädigung durch Vandalismus schützt.

Bevorzugt umfasst der Türschließer eine im Türschließergehäuse zwischen der Kolbenbaugruppe und der Schließerfeder angeordnete fluiddichte Trennwand, wobei die Kolbenstange fluiddicht durch die Trennwand verläuft. Die Trennwand ist gegenüber dem Türschließergehäuse ortsfest und abgedichtet. Zwischen der Kolbenstange und der Trennwand wird bevorzugt eine Gleitringdichtung verwendet. Es werden meist mehrere Dichtungen kombiniert, um fast 100% Dichtheit zu erreichen. Bei nur einer Dichtung wird alternativ eine Nutringdichtung eingesetzt.

Des Weiteren umfasst der Türschließer vorteilhafterweise einen im Türschließergehäuse geführten und an der Schließerfeder anliegenden Schließerfederspannkolben. Die Kolbenstange überträgt somit die Kraft von der Kolbenbaugruppe auf den Schließerfederspannkolben. Am Schließerfederspannkolben liegt die Schließerfeder an.

In vorteilhafter Weise ist zwischen der Trennwand und dem Schließerfederspannkolben der Sperrraum ausgebildet. Auf der einen Seite der Trennwand befindet sich somit die Kolbenbaugruppe mit der Abtriebswelle. Die Kolbenstange überträgt die Kräfte durch die Trennwand hindurch auf die andere Seite. Dort sind der Sperrraum, der Schließerfederspannkolben und die Schließerfeder angeordnet.

Für die im Türschließermechanismus enthaltene Freilauffunktion muss die Schließerfeder, auch Energiespeicherfeder genannt, mittels des hydraulischen Sperrraums in vorgespannter Lage gehalten werden, um die sofortige Schließung der Tür nach der manuellen Öffnungsbetätigung zu verhindern. Da die Wirkrichtung der Schließerfeder über die Kolbenbaugruppe auf die Abtriebswelle gerichtet ist, wird bevorzugt der zusätzliche Schließerfederspannkolben eingesetzt, der über die Kolbenstange auf die Kolbenbaugruppe einwirkt. In Verbindung mit der Kolbenstange und der Trennwand entsteht somit der hydraulische Sperrraum zur hydraulischen Arretierung der Schließerfeder. Die Kolbenstange erstreckt sich durch den Sperrraum, wodurch der Sperrraum auch als Ringraum zu bezeichnen ist. An diesem Aufbau des erfindungsgemäßen Türschiebers ist ein entscheidender Unterschied zwischen vorbekannten Türantrieben und dem hier vorgestellten Türschließer gut zu erläutern. Beim vorbekannten Türantrieb wird von einer Hydraulikpumpe aktiv unter Druck gesetztes Ölvolumen in die Druckräume gepumpt und somit über einen Federspannkolben eine Energiespeicherfeder vorgespannt. Im Gegensatz hierzu wird beim vorgestellten Türschließer das dem Hub entsprechende Ölvolumen während des manuellen Öffnungsvorgangs aus anderen Gehäusebereichen in den Sperrraum verdrängt und der Abfluss aus dem Sperrraum wird zum Beispiel über ein Magnetventil gesperrt. Somit wird bei dem hier vorgestellten Türschließer die gespeicherte Kraft der Schließerfeder über den Öldruck aufgenommen und kann nicht über die Kolbenbaugruppe Drehmoment auf die Abtriebswelle einleiten.

Die Kurvenrolle des Dämpfungskolbens und des Öffnungskolbens müssen in ständigem Kontakt mit der Abwälzkontur stehen, und wälzen sich so bei Verdrehen der Abtriebswelle auf der Abwälzkontur ab. Damit ergibt sich eine kontinuierliche und spielfreie Kontrolle des jeweiligen Drehwinkels der Antriebswelle. Bei den sehr kleinen Hub-Drehwinkel-Verhältnissen der Nockentechnologie ergäben sich bei zu viel Spiel unkontrollierte Türbewegungen. Dadurch entsteht für den Dämpfungskolben und den Öffnungskolben ein Arbeitshub. Auf der längeren Seite des Türschließergehäuses wird über den Öffnungskolben und die Kolbenstange die Schließerfeder vorgespannt. Auf der anderen Seite wird der hydraulisch wirkende Dämpfungskolben verschoben. Durch die Verschiebung des Dämpfungskolbens wird Hydraulikvolumen verdrängt, wodurch mittels zwischengeschalteter Drosselventile die Türgeschwindigkeit beim Schließvorgang kontrolliert bzw. gebremst werden kann. In Verbindung mit der Kraft der Schließerfeder entsteht über die Nockengeometrie der Abwälzkontur eine Kraftresultierende, die mit dem entsprechenden internen Hebelarm das Öffnungsschließmoment erzeugt. Um den vorgestellten Türschließer möglichst schmalbauend zu konstruieren, sind der Öffnungskolben und der Dämpfungskolben bevorzugt in einer bestimmten Weise angeordnet: Der Dämpfungskolben liegt auf der einen Seite der Abtriebswelle und der Öffnungskolben auf der anderen Seite der Abtriebswelle, sodass die Abtriebswelle zwischen den beiden Kolben angeordnet ist. Infolgedessen ist kein direkter Kontakt des Öffnungskolbens mit dem Dämpfungskolben möglich. Diese sehr schmale Bauweise des Türschließers bedingt somit, dass eine Zusammenfassung der beiden Funktionen, Vorspannen der Schließerfeder und Dämpfung des Schließvorgangs, in einem Bauteil nicht unmittelbar möglich ist. Die Realisierung der hydraulischen Zusatzfunktion "Freilauf" bedarf somit aufwendiger Maßnahmen auf beiden Gehäuseseiten, da die Funktionsbereiche getrennt innerhalb des Gehäuses liegen. Zum Vergleich: Bei breitbauenden Bodentürschließern ist üblicherweise nur ein Kolben auf der Federseite vorhanden, der gleichzeitig die Schließerfedervorspannung und die Dämpfungsfunktion wahrnimmt. Dabei wird jedoch ein sogenannter Laschenwagen eingesetzt, der die Nockenkontur mit zwei darin gelagerten Rollen umfasst und eine ständige Kontrolle des Nocken-Rollenkontaktes sicherstellt. Bei Verwendung dieses Laschenwagens bedarf es somit keiner weiteren Überlegungen zur Sicherstellung des spielfreien Kontaktes zwischen den beiden Kolben der Kolbenbaugruppe und der Abwälzkontur. Jedoch ist solch ein Laschenwagen bei integriert eingesetzten und damit sehr schmal bauenden Türschließern, wie er hier vorgestellt wird, nicht möglich. Des Weiteren ist bei Verwendung der Nockentechnologie zu beachten, dass hier als Nachteil im Vergleich zu herkömmlichen Zahnstangentechnologien geringe Hub und damit Volumenverdrängungen bei gleichzeitig hohen Federkrafterfordernissen vorliegen. Nockentürschließer benötigen somit tragfähige Lagerungen und aufwendige hydraulische Bauteilanordnungen. Es wird im Folgenden eine Variante vorgestellt, die es ermöglicht, dass die zwei getrennten Kolben, der Öffnungskolben und der Dämpfungskolben, stets spielfreien Kontakt zur Abwälzkontur haben. Dabei werden Zugstangen und interne Spielausgleichsfedern verwendet.

Da der Öffnungskolben und der Dämpfungskolben beidseitig der Abtriebswelle angeordnet sind, ist kein direkter Kontakt der beiden möglich. Die Zugstangen ermöglichen hier eine montage- und fertigungsfreundliche Verbindung der beiden Kolben. Des Weiteren bewirkt die Verwendung mehrerer Zugstangen eine wirksame Sicherung vor Verdrehung der beiden Kolben um die Türschließerlängsachse.

Die vier Zugstangen lassen sich gleichmäßig über den Querschnitt verteilen, sodass eine gleichmäßige Kraftübertragung möglich ist.

Vier Zugstangen ermöglichen einerseits den Durchmesser der Antriebswelle außen zu umfassen, und andererseits die Höhe der Nockenkontur ohne Einschränkungen der Belastbarkeit nutzen zu können. Somit ist eine horizontale und vertikale Symmetrie möglich.

In besonders bevorzugter Ausführung ist vorgesehen, dass jeweils zwei der vier Zugstangen symmetrisch zur Türschließer Längsachse angeordnet sind. Dies bedeutet, dass jeweils zwei diagonal gegenüberliegende Zugstangen den gleichen Abstand zur Abtriebswelle aufweisen. Insbesondere sind die vier Zugstangen an den Ecken eines nur modellhaft vorgestellten Quadrates oder Rechtecks angeordnet. Die Abtriebswelle verläuft durch den Schnittpunkt der Diagonale dieses Quadrates oder Rechtecks. Durch diese Anordnung ist eine absolut gleichmäßige, parallel zur Türschließer Längsachse gerichtete Kraftübertragung zwischen Öffnungskolben und Dämpfungskolben möglich und ein Verklemmen der Kolbenbaugruppe wird so weitgehend vermieden. In besonders bevorzugter Ausführung ist vorgesehen, dass zwei Zugstangen oberhalb der Abwälzkontur und beidseitig der Abtriebswelle angeordnet sind, und zwei weitere Zugstangen unterhalb der Abwälzkontur und beidseitig der Abtriebswelle angeordnet sind, sodass die Abwälzkontur mit ihrer vollständigen Höhe zwischen den beiden oberen Zugstangen und den beiden unteren Zugstangen angeordnet ist. Durch die oberhalb und unterhalb des Nockenbereichs bzw. der Abwälzkontur liegenden Zugstangen kann die volle Tragfähigkeit der Abwälzkontur erhalten bleiben.

Bevorzugt ist vorgesehen, dass die Kolbenbaugruppe zumindest zwei integrierte Spielausgleichsfedern umfasst, wobei zumindest zwei diagonal zueinander angeordnete Zugstangen mittels der Spielausgleichsfedern auf Zug belastet sind, um ein Spiel zwischen der Abwälzkontur und den Kurvenrollen auszugleichen.

Diese zwei auf Zug belasteten Zugstangen dienen zum Spielausgleich zwischen den Kurvenrollen der beiden Kolben und der Abwälzkontur und die beiden anderen diagonalen Stangen dienen zur Verdrehsicherung und vermeiden somit Kippmomente und damit verbundene Reibung und Verklemmung von Öffnungskolben und Dämpfungskolben. Die beiden Kolben nehmen somit das kleinste, mögliche Maß zwischen den Rollen ein.

Bevorzugt sind die Spielausgleichsfedern im Dämpfungskolben und/oder im Öffnungskolben angeordnet. Es sind somit zum Spielausgleich zwischen den Kurvenrollen und der Abwälzkontur keine außen an die Kolbenbaugruppe angreifenden Federn notwendig. Die Kolbenbaugruppe muss sich somit nicht gegen ortsfeste Anteile des Türschließers abstützen und kann durch die interne Anordnung von Zugstangen und Spielausgleichsfedern für sich allein genommen den Spielausgleich sicherstellen.

Durch die fehlende Abstützung an ortsfesten Bauteilen wird auch kein Kraftvektor und damit kein Drehmoment in die Antriebswelle eingeleitet. Damit bleibt die Tür im Freilaufbetrieb genau an der vom Benutzer gewünschten Stelle stehen. Würde auch nur ein geringes Drehmoment im Freilauf wirken, so wird sich die Türe bewegen.

In bevorzugter Weise ragen die Zugstangen durch die Spielausgleichsfedern hindurch, wobei die Spielausgleichsfedern als Druckfedern ausgebildet sind und gegen die Enden der Zugstangen drücken, sodass die Zugstangen auf Zug belastet werden. Die anderen Enden der Spielausgleichsfedern stützen sich gegen den Öffnungskolben oder den Dämpfungskolben. Die nicht federbelasteten Enden der Zugstangen sind fest im jeweils anderen Kolben verschraubt.

Im Folgenden wird die Erfindung anhand der begleitenden Zeichnung genauer erläutert. Dabei zeigt:
- Fig. 1: einen erfindungsgemäßen Türschließer nach einem ersten Ausführungsbeispiel,
- Fig. 2: einen erfindungsgemäßen Türschließer bei geschlossener Türstellung bei 0° Öffnungswinkel mit inaktivem Freilauf für alle Ausführungsbeispiele,
- Fig. 3: einen erfindungsgemäßen Türschließer bei geöffneter Türstellung bei 150° Öffnungswinkel mit inaktivem Freilauf für alle Ausführungsbeispiele,
- Fig. 4: einen erfindungsgemäßen Türschließer bei geschlossener Türstellung bei 0 Öffnungswinkel mit aktiviertem Freilauf für alle Ausführungsbeispiele,
- Fig. 5: einen erfindungsgemäßen Türschließer während Öffnungsvorgangs mit aktiviertem Freilauf für Ausführungsbeispiele,
- Fig. 6: eine Detailansicht des Freilaufs gemäß dem ersten Ausführungsbeispiel,
- Fig. 7: einen erfindungsgemäßen Türschließer nach einem zweiten Ausführungsbeispiel mit inaktivem Freilauf,
- Fig. 8: den erfindungsgemäßen Türschließer nach dem zweiten Ausführungsbeispiel mit aktiviertem Freilauf,
- Fig. 9: eine Kolbenbaugruppe eines erfindungsgemäßen Türschließers nach einem dritten Ausführungsbeispiel,
- Fig. 10: verschiedene Schnittansichten der Kolbenbaugruppe nach dem dritten Ausführungsbeispiel, und
- Fig. 11: einen erfindungsgemäßen Türschließer nach einem vierten Ausführungsbeispiel.

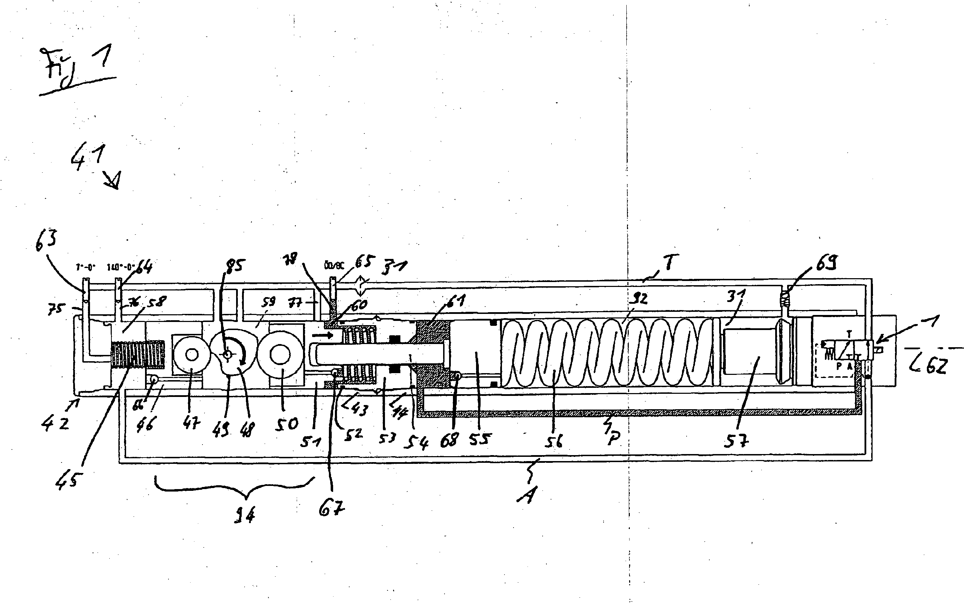

Im Folgenden wird anhand von Fig. 1 der grundlegende Aufbau sowie die Hydrauliksteuerung und die Funktionsweise eines Türschließers 41 gemäß dem ersten Ausführungsbeispiel erläutert.

Der Türschließer 41 erstreckt sich entlang einer Türschließerlängsachse 62. Der Türschließer 41 umfasst ein Türschließergehäuse 42, das sich wiederum aus einem ersten Türschließergehäuseteil 43 und einem zweiten Türschließergehäuseteil 44 zusammensetzt: In Fig. 1 sind die diversen hydraulischen Leitungen außerhalb des Türschließergehäuses 42 dargestellt. Dies dient jedoch nur der Übersichtlichkeit. In der tatsächlichen Ausführung sind die Hydraulikleitungen in das Türschließergehäuse 42 integriert. Im Folgenden wird der Aufbau des Türschließers 41 entlang seiner Türschließerlängsachse 62 von links nach rechts vorgestellt. Eine erste Druckfeder 45 stützt sich gegen das Türschließergehäuse 42, insbesondere gegen eine Stirnseite des ersten Türschließergehäuseteils 43. Die erste Druckfeder 45 belastet eine Kolbenbaugruppe 94 auf Druck. Diese Kolbenbaugruppe 94 ist im Türschließergehäuse 42, insbesondere im ersten Türschließergehäuseteil 43, geführt. Gegenüberliegend der ersten Druckfeder 45 greift eine zweite Druckfeder 52 an der Kolbenbaugruppe 94 an. Diese zweite Druckfeder 52 stützt sich gegen eine Trennwand 53, insbesondere Gehäusetrennwand. Die Trennwand 53 befindet sich an der Schnittstelle zwischen dem ersten Türschließergehäuseteil 43 und dem zweiten Türschließergehäuseteil 44. Die Trennwand 53 stellt einen Flansch zur Verbindung der beiden Gehäuseteile 43, 44 dar und dichtet gleichzeitig die beiden Gehäuseteile 43, 44 voneinander ab.

Durch die Trennwand 53 hindurch erstreckt sich eine Kolbenstange 54 entlang der Türschließerlängsachse 62. Die Kolbenstange 54 ist dicht, insbesondere mittels einer Gleitringdichtung, in der Trennwand 53 geführt. Die Kolbenstange 54 ist fest mit einem Schließerfederspannkolben 55 verbunden. Dieser Schließerfederspannkolben 55 ist im Türschließergehäuse 42, insbesondere im zweiten Türschließergehäuseteil 44, geführt. An den Schließerfederspannkolben 55 schließt sich eine Schließerfeder 56 an. Die Schließerfeder 56 stützt sich auf der einen Seite gegen den Schließerfederspannkolben 55 und auf der anderen Seite gegen eine Einstelleinheit 57 für die Schließerfedervorspannung. Im Anschluss an die Einstelleinheit 57 für die Schließerfedervorspannung befindet sich ein 3/2-Magnet-wegeventil 1, ausgebildet als Cartridgeventil, integriert im Türschließergehäuse 42, insbesondere im zweiten Türschließergehäuseteil 44.

Die Kolbenbaugruppe 94 umfasst auf ihrer der ersten Druckfeder 45 zugewandten Seite einen Dämpfungskolben 46 und auf ihrer der Kolbenstange 54 zugewandten Seite einen Öffnungskolben 51. Der Dämpfungskolben 46 umfasst eine in ihm drehbar gelagerte erste Kurvenrolle 47. Der Öffnungskolben 51 umfasst eine in ihm drehbar gelagerte zweite Kurvenrolle 50. Zwischen der ersten Kurvenrolle 47 und der zweiten Kurvenrolle 50 ist eine Abtriebswelle 48, ausgebildet als Nockenwelle, angeordnet. Die Abtriebswelle 48 erstreckt sich entlang einer Abtriebsachse 85 senkrecht zur Türschließerlängsachse 62. Diese Abtriebswelle 48 überträgt die Kraft aus der Kolbenbaugruppe 94 über ein Hebelgestänge bzw. Gleitschienengestänge zur Tür sowie von der Tür auf die Kolbenbaugruppe 94. Hierzu umfasst die Abtriebswelle 48 eine nockenförmig ausgebildete Abwälzkontur 49. Die erste Kurvenrolle 47 und die zweite Kurvenrolle 50 wälzen auf dieser Abwälzkontur 49 ab. Die Abwälzkontur 49 ist herzförmig ausgestaltet.

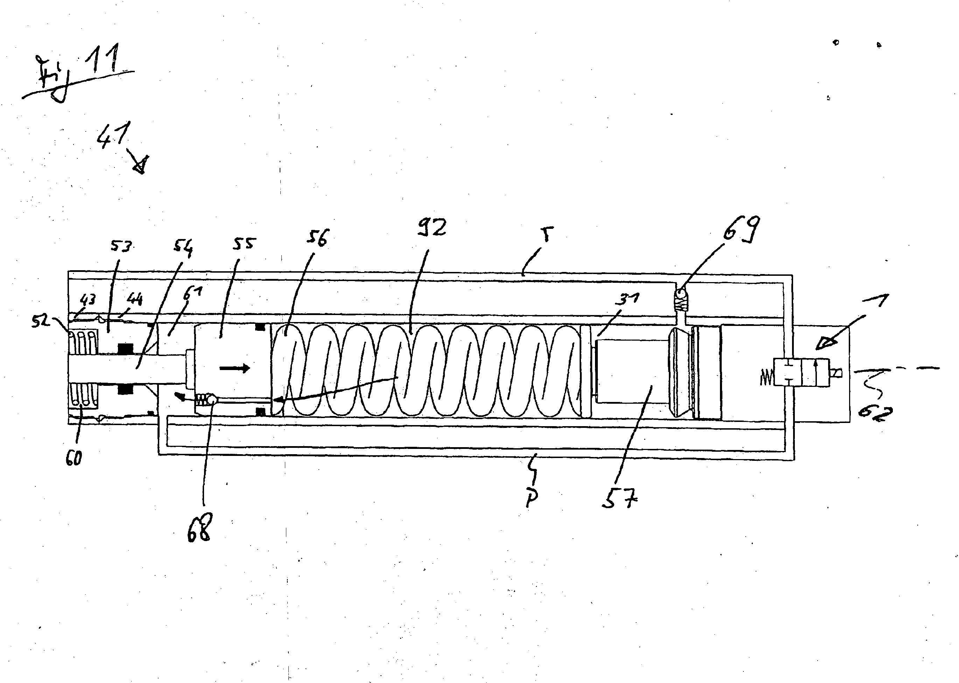

Der Dämpfungskolben 46, der Öffnungskolben 51 und der Schließerfederspannkolben 55 sind dicht innerhalb des Türschließergehäuses 42 geführt und umfassen hierzu bevorzugt an ihrem Umfang Dichtungen oder Dichtflansche. Durch diese dichte Führung der Kolben entstehen im Türschließergehäuse 42 verschiedene Räume bzw. Kammern, die über diverse hydraulische Leitungen miteinander verbunden sind. Diese Kammern bzw. Räume werden wiederum gemäß dem in Fig. 1 gezeigten Aufbau von links nach rechts entlang der Türschließerlängsachse 62 vorgestellt: Definiert durch das linke Stirnende des Türschließergehäuses 42, insbesondere des ersten Türschließergehäuseteils 43, und den Dämpfungskolben 46, ist ein Schließdämpfungsraum 58 ausgebildet. Zwischen dem Dämpfungskolben 46 und dem Öffnungskolben 51 befindet sich ein Kolbenbaugruppeninnenraum 59. Dieser kann auch als Nockenwellenraum bezeichnet werden. Der Kolbenbaugruppeninnenraum 59 ist beidseitig durch den Dämpfungskolben 46 und den Öffnungskolben 51 abgedichtet und befindet sich stets auf Tankdruckniveau. Zwischen dem Öffnungskolben 51 und der Trennwand 53 befindet sich ein Öffnungsdämpfungsraum 60. Auf der anderen Seite der Trennwand 53 befindet sich zwischen der Trennwand 53 und dem Schließerfederspannkolben 55 der Sperrraum 61. Der Sperrraum 61 ist definiert durch die Trennwand 53, die Wandung des zweiten Türschließergehäuseteils 44 und den Schließerfederspannkolben 55. Des Weiteren umfasst der Türschließer 41 einen Tankraum 31. Der Tankraum 31 liegt zwischen dem Schließfederspannkolben 55 und dem Magnetwegeventil 1 und nimmt die Schließerfeder 56 und die Einstelleinheit 57 auf. Anhand der Fig. 11 bis 18 wird später eine genaue Ausbildung des Magnetwegeventils 1 dargestellt. Hierbei wird auch die spezielle konstruktive Ausführung eines bevorzugten Tankraums 31 beschrieben. Insbesondere kann auch ein Schließerfederaufnahmeraum 92 und/oder der Kolbenbaugruppeninnenraum 59 mittels ungedrosselter Verbindungen zum Tankraum 31 als Tank mitgenutzt werden.

Der Türschließer 41 umfasst des Weiteren eine erste hydraulische Leitung, ausgebildet als Druckleitung P, eine zweite hydraulische Leitung, ausgebildet als Arbeitsleitung A, und eine dritte hydraulische Leitung, ausgebildet als Tankleitung T. Die drei hydraulischen Leitungen verlaufen parallel zur Türschließerlängsachse 62 im Türschließergehäuse 42. Über kurze, radial bzw. senkrecht zur Türschließerlängsachse 62 verlaufende Kanäle sind die drei hydraulischen Leitungen mit den verschiedenen Kammern bzw. Räumen im Türschließer 41 verbunden. Fig. 1 zeigt die hydraulischen Leitungen nur schematisch. Tatsächlich sind die hydraulischen Leitungen in das Türschließergehäuse 42 integriert. Die Druckleitung P führt vom Sperrraum 61 direkt und ungedrosselt zum Magnetwegeventil 1. Die Arbeitsleitung A führt vom Schließdämpfungsraum 58 direkt und ungedrosselt zum Magnetwegeventil 1. Das Magnetwegeventil 1 ist ferner mit der Tankleitung T verbunden. Die Beschreibung als direkt und ungedrosselt bedeutet, dass keine separaten Drosseln in den Leitungen vorgesehen sind. Nichtsdestotrotz kann der Druck jedoch über etwaige Filter sowie dynamische Druckunterschiede leicht gedrosselt sein.

Der Öffnungsdämpfungsraum 60 ist über eine erste gedrosselte Verbindung 78 mit der Tankleitung T verbunden. Hierzu ist ein erstes Drosselventil 65 eingesetzt. Darüber hinaus besteht zwischen dem Öffnungsdämpfungsraum 60 und der Tankleitung T eine erste ungedrosselte Verbindung 77. Die Öffnung des Öffnungsdämpfungsraums 60 in die erste ungedrosselte Verbindung 77 befindet sich näher an der Abtriebswelle 48 als die Öffnung des Öffnungsdämpfungsraums 60 in die erste gedrosselte Verbindung 78. Dadurch kann nach einem bestimmten Öffnungswinkel der Tür die ungedrosselte Verbindung 77 durch den Öffnungskolben 51 verschlossen werden.

Der Schließdämpfungsraum 58 ist über eine zweite gedrosselte Verbindung 75, die an der Stirnseite des ersten Türschließergehäuseteils 43 ansetzt, mit der Tankleitung T verbunden. Hierzu ist ein zweites Drosselventil 63 eingesetzt. Des Weiteren befindet sich in der Mantelfläche des Türschließergehäuses 42 eine dritte gedrosselte Verbindung 76 zwischen dem Schließdämpfungsraum 58 und der Tankleitung T mit einem dritten Drosselventil 64. Der Kolbenbaugruppeninnenraum 59 ist über zumindest einen radialen Kanal mit der Tankleitung T ungedrosselt verbunden. In der Tankleitung T ist ein Filter 31 eingezeichnet. Die Position des Filters 31 ist hier rein beispielhaft. So kann beispielsweise der Filter 31 auch im Magnetventil 1 integriert sein. Es können sich auch bevorzugt weitere Filter 31 in den anderen hydraulischen Leitungen befinden.

Im Dämpfungskolben 46 ist ein erstes Rückschlagventil 66 eingebaut. Dieses sperrt in Richtung des Kolbenbaugruppeninnenraums 59. Im Schließerkolben 51 ist ein zweites Rückschlagventil 67 eingebaut. Dieses sperrt ebenfalls in Richtung des Kolbenbaugruppeninnenraums 59. Im Schließerfederspannkolben 55 ist ein drittes Rückschlagventil 68 vorgesehen. Dieses ermöglicht Hydraulikfluss in Richtung des Sperrraumes 61 und sperrt in Richtung Tankraum 31. Zwischen dem Tankraum 31 und der Tankleitung T ist ein viertes Rückschlagventil 69 vorgesehen. Dieses Rückschlagventil ist federbelastet und sperrt in Richtung der Tankleitung T. Durch das erste, zweite und dritte Rückschlagventil 66, 67 und 68 können sich der Schließdämpfungsraum 58, der Öffnungsdämpfungsraum 60 und der Sperrraum 61 bei Expansion stets mit Hydrauliköl aus dem Tankvolumen füllen.

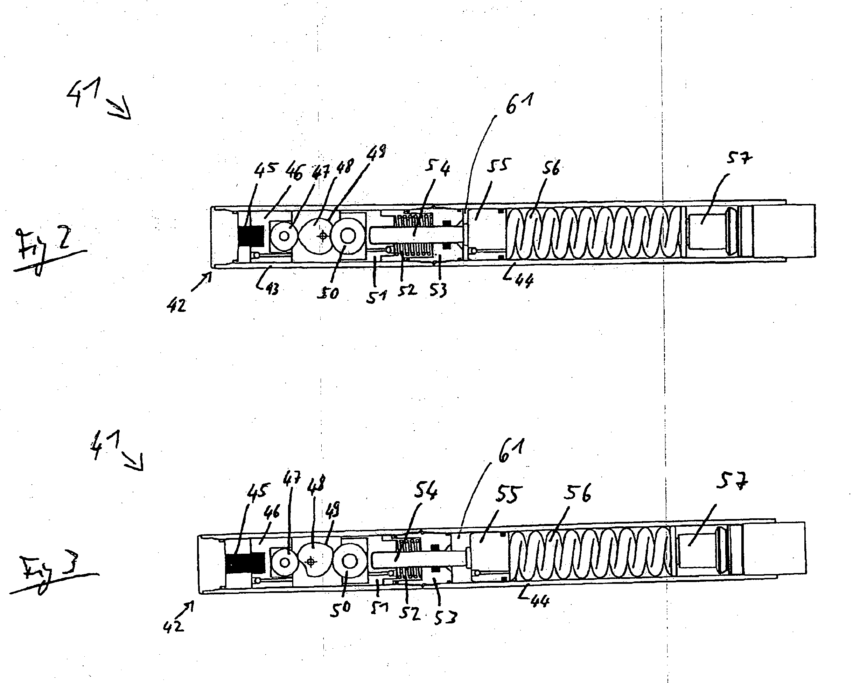

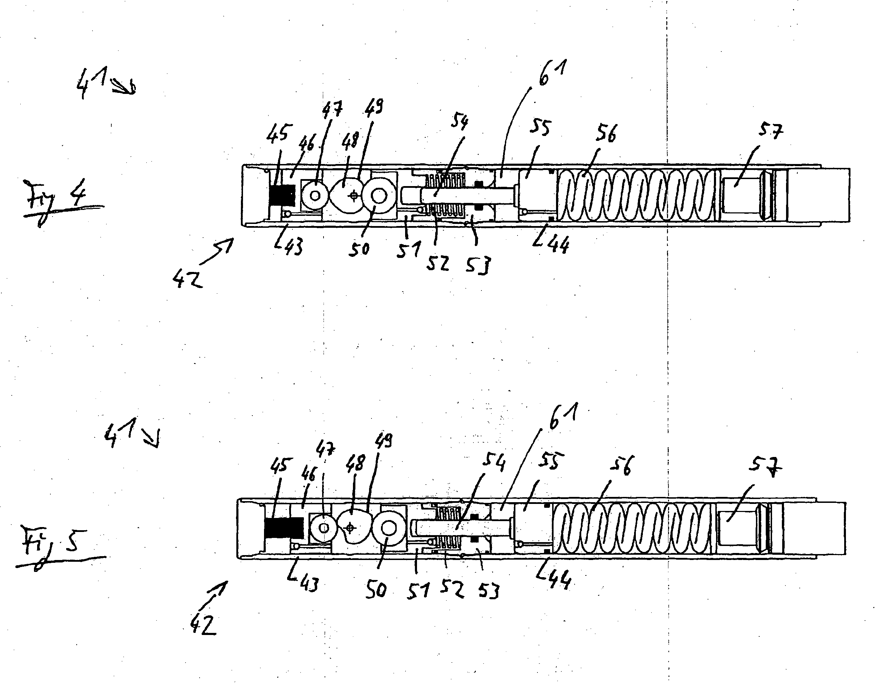

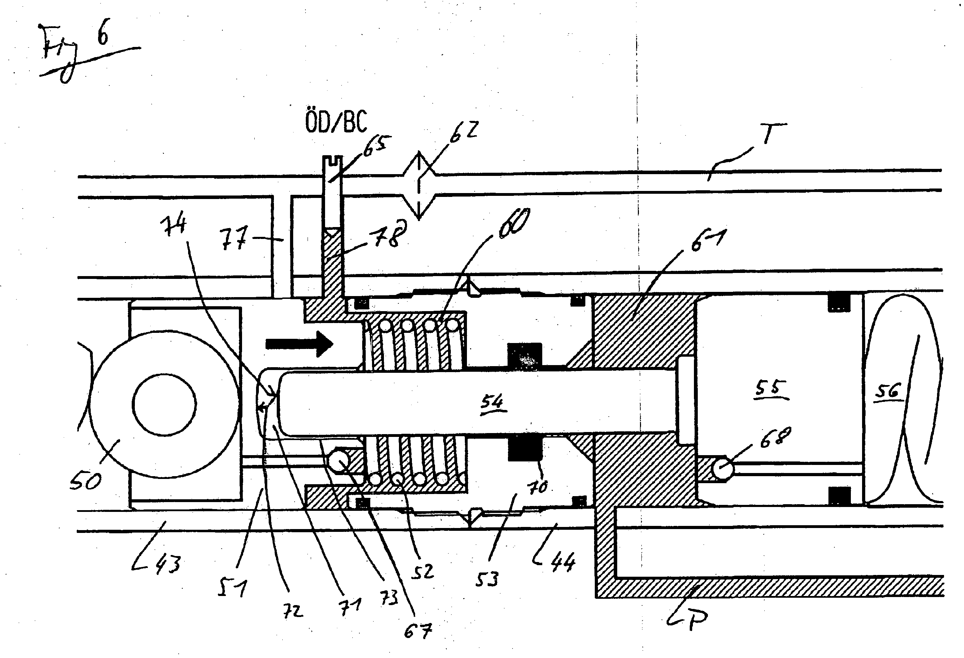

Zwischen der Kolbenstange 54 und dem Öffnungskolben 51 ist eine Freilaufanordnung ausgebildet. Die konstruktive Ausgestaltung dieser Freilaufanordnung wird in Fig. 6 genauer erläutert. Zunächst wird jedoch anhand der Fig. 2 bis 5 der Funktions- und Bewegungsablauf des Türschließers 41 genauer erläutert. Der Funktions- und Bewegungsablauf des Türschließers 41 gemäß den Fig. 2 bis 5 gilt für alle hier vorgestellten Ausführungsbeispiele. Fig. 2 zeigt den Türschließer 41 bei 0° Winkelstellung mit entspannter Schließerfeder. Fig. 2 zeigt somit die Ausgangsstellung des Türschließers 41. Fig. 3 zeigt den Türschließer während des Öffnungsvorgangs bei einer Winkelstellung von 150° der Antriebswelle 48. Die Tür wird hierbei durch eine Person geöffnet. Dadurch rotiert die über ein Gestänge mit dem Türrahmen verbundene Abtriebswelle 48. Über die Abwälzkontur 49 überträgt sich die Kraft auf die Kurvenrollen 47, 50. Dies bewirkt eine translatorische Bewegung der Kolbenbaugruppe 94 nach rechts. Mit der Kolbenbaugruppe 94 wird auch die Kolbenstange 54 und somit der Schließerfederspannkolben 55 nach rechts bewegt. Dadurch spannt sich die Schließerfeder 56 vor. Während dieses Öffnungsvorganges ist die Druckleitung P mittels des Magnetwegeventils 1 verschlossen. Über das dritte Rückschlagventil 68 wird Hydraulikflüssigkeit in den Sperrraum 61 gedrückt. Der in Fig. 3 dargestellte Öffnungsvorgang dient zum Spannen der Schließerfeder 56. Nach dem Spannen der Schließerfeder 56 und unter Beibehaltung der verschlossenen Druckleitung P ist die Freilauffunktion des Türschließers 41 aktiv. Fig. 4 zeigt den Türschließer 41 wieder in geschlossener Stellung bei einem Türwinkel von 0°. Wie hier gut zu sehen ist, verbleibt die Schließerfeder 56 in der gespannten Stellung, da der Sperrraum 61 mit Hydrauliköl gefüllt bleibt. Zusammen mit dem Schließerfederspannkolben 55 bleibt auch die Kolbenstange 54 unbeweglich. Die Kolbenbaugruppe 94 hebt dank der Freilaufanordnung bei einer manuell an der Tür getätigten Schließbewegung über die Rückdrehung der Antriebswelle 42 von der Kolbenstange 54 ab. Die Kolbenbaugruppe 94 ist hier zusammen mit der Tür frei beweglich. Lediglich über die beiden Druckfedern 45, 52 wird eine leichte Kraft auf die Kolbenbaugruppe 94 übertragen, damit über die Kurvenrollen 47 und 50 ein stetiger und spielfreier Kontakt der Kolbenbaugruppe 94 mit der Antriebswelle 48 bzw. der Nockenkontur 49 gewährleistet wird. Wie Fig. 5 zeigt, verbleibt während der Freilauffunktion die Schließerfeder 56 in ihrer gespannten und arretierten Position. Die Tür ist währenddessen ohne Drehmoment frei beweglich.

Fig. 6 zeigt eine Detailansicht des Freilaufs gemäß dem ersten Ausführungsbeispiel. Die Freilaufanordnung ist hier als Verschiebekupplung ausgeführt. Die beiden wesentlichen Bestandteile dieser Freilaufanordnung sind die erste Stirnfläche 74 und die zweite Stirnfläche 72. Die erste Stirnfläche 74 ist parallel zur zweiten Stirnfläche 72. Beide Stirnflächen 74, 72 stehen senkrecht zur Türschließerlängsachse 62. Die erste Stirnfläche 74 ist eine Stirnfläche der Kolbenstange 54. Die zweite Stirnfläche 72 befindet sich an der Kolbenbaugruppe 94, insbesondere am Öffnungskolben 71. In der in Fig. 6 dargestellten Ausführung ist in den Öffnungskolben 51 eine Tasche 71 eingearbeitet. In diese Tasche 71 greift ein Teil der Kolbenstange 54 ein und ist darin entlang der Kolbenführung 73 geführt. Die zweite Stirnfläche 72 ist als Boden der Tasche 71 ausgebildet. Die beiden Stirnflächen 74, 72 stehen sich somit in der Tasche 71 gegenüber und können im Falle des Freilaufs voneinander abheben.

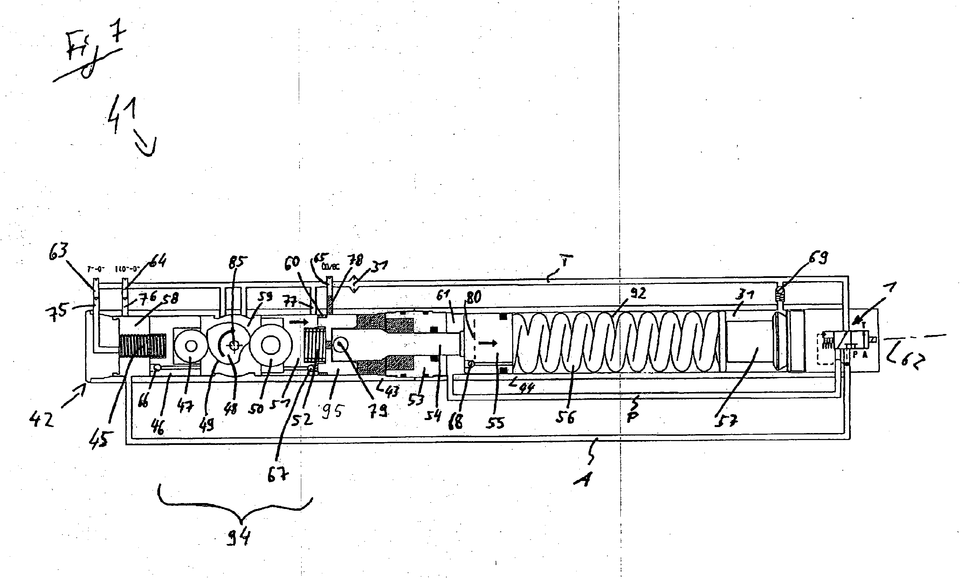

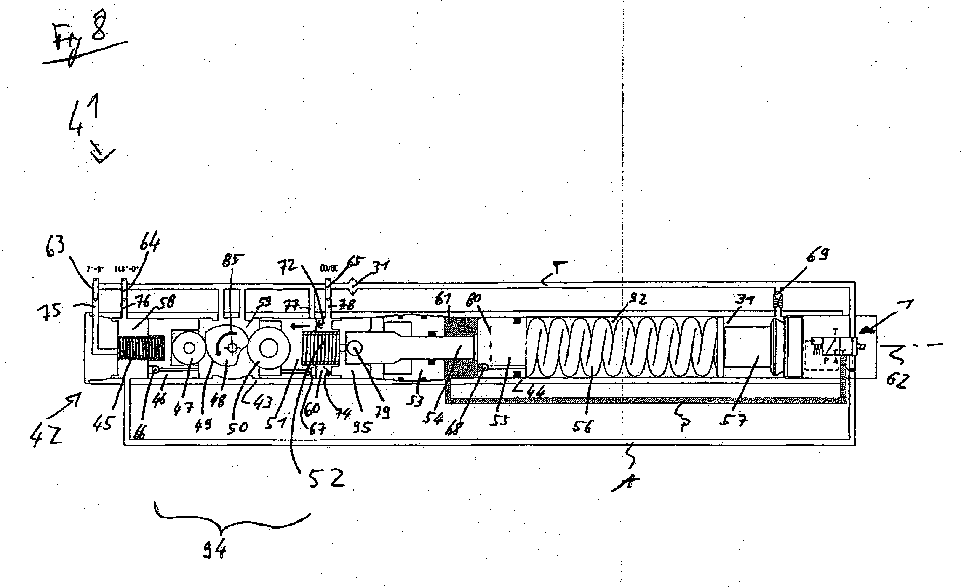

Die Fig. 7 und 8 zeigen einen Türschließer 41 gemäß einem zweiten Ausführungsbeispiel. Gleiche bzw. funktional gleiche Bauteile sind in allen Ausführungsbeispielen mit den gleichen Bezugszeichen versehen. Fig. 7 zeigt einen Türschließer 41 während des Vorspannens der Schließerfeder 56. In Fig. 8 ist der Sperrraum 61 hydraulisch über die Druckleitung P blockiert. Dadurch verbleibt der Schließerfederspannkolben 55 und die Schließerfeder 56 in gespannter Position. Die Kolbenbaugruppe 94 und die Tür sind im Freilauf beweglich.

Das zweite Ausführungsbeispiel entspricht dem ersten Ausführungsbeispiel bis auf die im Folgenden beschriebenen Unterschiede: Im Unterschied zum ersten Ausführungsbeispiel ist im zweiten Ausführungsbeispiel ein Zusatzkolben 95 zwischen der Trennwand 53 und der Kolbenbaugruppe 94, insbesondere dem Öffnungskolben 51, angeordnet. Der Zusatzkolben 95 ist zur Übertragung translatorischer Bewegung fest mit der Kolbenstange 54 verbunden. Die erste Stirnfläche 74 ist stirnseitig am Zusatzkolben 95 ausgebildet. Der Zusatzkolben 95 umfasst einen Durchlass, sodass sowohl der Raum zwischen Zusatzkolben 95 und Kolbenbaugruppe 94 sowie der Raum zwischen Zusatzkolben 95 und Trennwand 53 den Öffnungsdämpfungsraum 60 bilden. Ein weiterer Unterschied zwischen dem ersten und zweiten Ausführungsbeispiel ist, dass im zweiten Ausführungsbeispiel die Kolbenstange 54 schwenkbar mit dem Zusatzkolben 95 und dem Schließerfederspannkolben 55 verbunden ist. Die Verbindung zwischen der Kolbenstange 54 und dem Zusatzkolben 95 ist um eine erste Achse 79 schwenkbar. Die Verbindung zwischen der Kolbenstange 54 und dem Schließerfederspannkolben 55 ist um eine zweite Achse 80 schwenkbar. Die beiden Achsen 79, 80 stehen beide senkrecht zur Türschließerlängsachse 62. Darüber hinaus steht die erste Achse 79 senkrecht zur zweiten Achse 80. Ferner steht die Achse 80 senkrecht zur Türschließerlängsachse 62. Diese schwenkbare Anbindung der Kolbenstange 54 verhindert bei Auftreten von Kräften, die nicht parallel zur Türschließerlängsachse 62 verlaufen, ein Verklemmen der Anordnung.

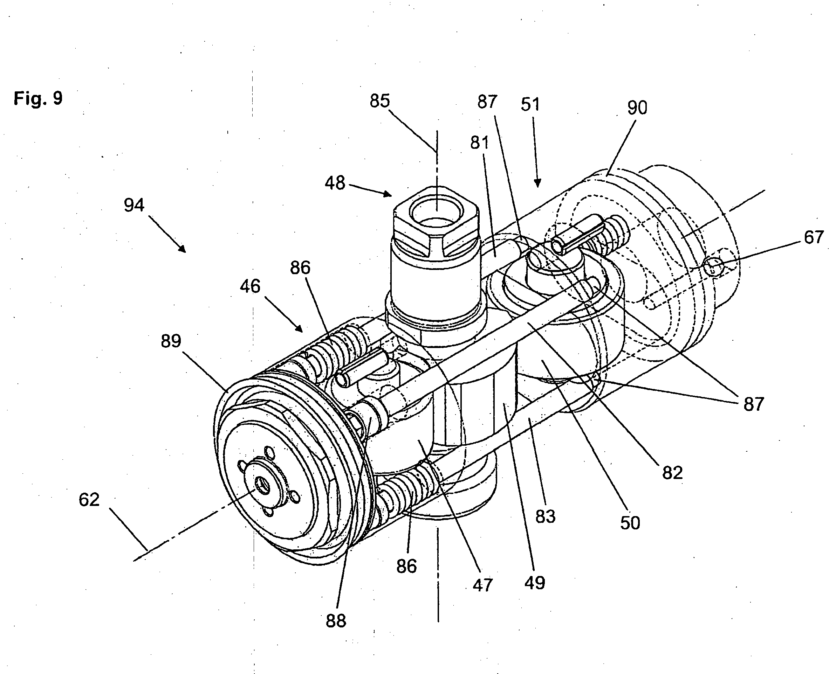

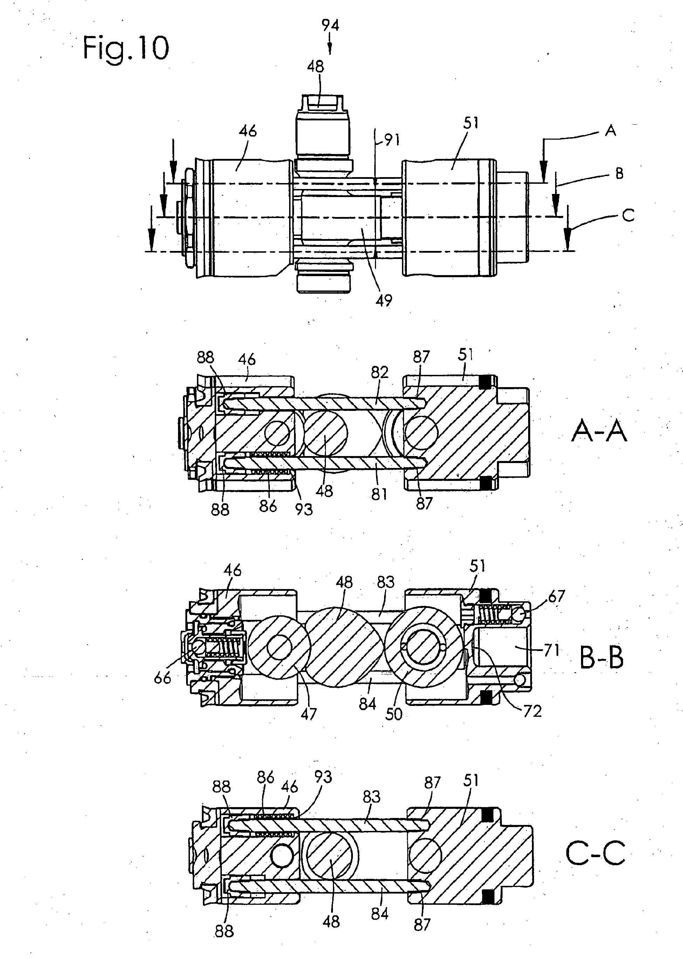

Die Fig. 9 und 10 zeigen eine Kolbenbaugruppe 94 des Türschließers 41 gemäß einem dritten Ausführungsbeispiel. Gleiche bzw. funktional gleiche Bauteile sind in allen Ausführungsbeispielen mit den gleichen Bezugszeichen versehen. Die Kolbenbaugruppe 94 aus dem dritten Ausführungsbeispiel kann bevorzugt in den Türschließern 41 nach allen hier vorgestellten Ausführungsbeispielen angewandt werden.

Die in den Fig. 9 und 10 vorgestellte Kolbenbaugruppe 94 ersetzt die Kolbenbaugruppe 94 aus den Fig. 1 bis 7, dabei insbesondere den Dämpfungskolben 46 mit der ersten Kurvenscheibe 47 und den Öffnungskolben 51 mit der zweiten Kurvenscheibe 50. Die Abtriebswelle 48 bleibt unverändert. Durch die Verwendung der Kolbenbaugruppe 94 gemäß dem dritten Ausführungsbeispiel sind die erste Druckfeder 45 und die zweite Druckfeder 52 nicht mehr nötig, können jedoch trotzdem zusätzlich verwendet werden.

Fig. 9 zeigt die Kolbenbaugruppe 94, wobei der Dämpfungskolben 46 und der Öffnungskolben 51 mittels einer ersten Zugstange 81, einer zweiten Zugstange 82, einer dritten Zugstange 83 und einer vierten Zugstange 84 miteinander verbunden sind. Die vier Zugstangen 81-84 sind parallel zur Türschließerlängsachse 62 angeordnet. Darüber hinaus befinden sich die vier Zugstangen 81-84 an vier Ecken eines rein zu Erklärungszwecken vorzustellenden Quadrates oder Rechtecks. Die Abtriebsachse 85 der Abtriebswelle 48 verläuft durch den Schnittpunkt der Diagonalen dieses Quadrates oder Rechtecks. Durch diese spezielle Anordnung der vier Zugstangen 81-84 kann die volle Höhe 91 (siehe Fig. 10) der Abwälzkontur 49 zwischen den beiden oben angeordneten Zugstangen 81, 82 und den beiden unten angeordneten Zugstangen 83, 84 angeordnet werden. Die Höhe 91 der Abwälzkontur 49 definiert sich dabei in Richtung der Abtriebsachse 85. Die Abwälzkontur 49 bedarf keiner Aussparungen für die Zugstangen 81-84 und kann somit optimal belastet werden.

Die vier Zugstangen 81-84 sind jeweils über Verschraubungen 87 fest mit dem Öffnungskolben 51 verbunden. An ihrem anderen Ende ragen die vier Zugstangen 81-84 jeweils in Durchgangsbohrungen des Dämpfungskolbens 46. Hier sind die Enden der Zugstangen 81-84 jeweils mit einer Federspannmutter 88 verschraubt. Die erste Zugstange 81 und die zur ersten Zugstange 81 diagonal angeordnete dritte Zugstange 83 sind jeweils mit einer integrierten Spielausgleichsfeder 86 auf Zug belastet. Die integrierten Spielausgleichsfedern 86 stecken auf der ersten Zugstange 81 bzw. dritten Zugstange 83 und befinden sich im Dämpfungskolben 46. Ein erstes, der Abtriebswelle 48 abgewandtes Ende der Spielausgleichsfedern 86 stützt sich gegen die Federspannmutter 88, welche mit der entsprechenden Zugstange 81, 83 verschraubt ist. Ein zweites, der Abtriebswelle 48 zugewandtes Ende der jeweiligen Spielausgleichsfeder 86 stützt sich gegen einen Absatz 93 (siehe Fig. 10), ausgebildet im Dämpfungskolben 46. Durch diese spezielle Anordnung können die Spielausgleichsfedern 86, welche als Druckfedern ausgebildet sind, die erste und dritte Zugstange 81, 83 auf Zug belasten.

Darüber hinaus zeigt Fig. 9 einen ersten Abdichtungsflansch 89 am Dämpfungskolben 46, welcher den Dämpfungskolben 46 gegenüber dem Türschließergehäuse 42, insbesondere gegenüber dem Schließdämpfungsraum 58, abdichtet. In ähnlicher Weise ist der Öffnungskolben 51 mittels eines zweiten Abdichtungsflansches 90 gegenüber dem Türschließergehäuse 42 abgedichtet. Der zweite Abdichtungsflansch 90 ist als Stützschulter für eine Kolbendichtung ausgebildet. Der Öffnungskolben 51 ist einteilig mit dem zweiten Abdichtungsflansch 90 ausgeführt. Diese beiden Abdichtungsflansche 89, 90 finden in den Kolbenbaugruppen 94 aller Ausführungsbeispiele Anwendung.

Die integrierten Spielausgleichsfedern 86 sind innerhalb eines Kolbens, vorzugsweise des Dämpfungskolbens 46 angeordnet. Die integrierten Spielausgleichsfedern 86 sorgen in Verbindung mit ihren zugeordneten Zugstangen dafür, dass der kleinste möglichste Abstand der beiden Kurvenrollen 47 und 50 eingehalten wird, die durch die Abwälzkontur 49 beabstandet sind, wobei die Kurvenrollen 47 und 50 spielfrei an der Abwälzkontur 49 anliegen.

Die integrierten Spielausgleichsfedern 86 sind derart auszulegen, dass die Reibung der Bauteile innerhalb der Kolbenbaugruppe 94 sowie die Reibung der Abdichtungsflansche 89 und 90 gegenüber dem Abschnitt des ersten Türschließergehäuseteils 43 überwunden wird, da ansonsten bei Hubbewegung der Baugruppe 94 im Freilaufbetrieb die Kurvenrollen 47 und 50 von der Abwälzkontur 49 abheben würden.

Durch diese Anordnung der integrierten Spielausgleichsfedern 86 entsteht kein Widerlager gegenüber Bauteilen des Türschließers außerhalb der Kolbenbaugruppe 94, wodurch keine Kräfte auf die Abwälzkontur 49 und damit kein ungewolltes Drehmoment auf die Abtriebswelle 48 übertragen wird.

Fig. 10 zeigt drei Schnittansichten der Kolbenbaugruppe 94 gemäß dem dritten Ausführungsbeispiel. Im Schnitt B-B ist zu erkennen, dass hier wiederum die Tasche 71 im Öffnungskolben 51 ausgebildet ist. Am Boden dieser Tasche befindet sich die zweite Stirnfläche 72. In diese Tasche 71 greift die Kolbenstange 54 ein, sodass die Freilauffunktion gewährleistet ist.

Die bisher vorgestellten Ausführungsbeispiele zeigen zwei grundlegende Möglichkeiten zum Spielausgleich zwischen den Kurvenrollen 47, 50 und der Abwälzkontur 49. In den ersten beiden Ausführungsbeispielen wird der Dämpfungskolben 46 durch die erste Druckfeder 45 leicht in Richtung der Abtriebswelle 48 druckbelastet. Der Öffnungskolben 51 wird mit der zweiten Druckfeder 52 leicht in Richtung der Abtriebswelle 48 druckbelastet. Dies gewährleistet einen steten Kontakt zwischen Kurvenrollen 47, 50 und der Abwälzkontur 49. Eine Alternative hierzu zeigt das dritte Ausführungsbeispiel. Hier ist der Spielausgleich in die Kolbenbaugruppe 94 integriert. Durch die Zugstangen 81-84 und die integrierten Spielausgleichsfedern 89 werden der Dämpfungskolben 46 und der Öffnungskolben 51 stets leicht zusammengezogen, sodass die beiden Kurvenrollen 47, 50 stets an der Abwälzkontur 49 anliegen. Besonders vorteilhaft ist hier, dass keinerlei Moment auf die Abtriebswelle 48 wirkt und somit im Freilauf die Tür in jeder beliebigen Position stehen bleibt. Die symmetrische und diagonale Anordnung der vier Zugstangen 81-84 dient zur absolut gleichmäßigen Kraftübertragung und verhindert somit jegliches Verkanten. Deshalb sind auch die beiden verwendeten Spielausgleichsfedern 46 an zwei zueinander diagonalen Zugstangen 81, 83 angeordnet. Alternativ hierzu könnte auch an jeder der Zugstangen 81-84 eine Spielausgleichsfeder 86 vorgesehen sein. Selbstverständlich können die Spielausgleichsfedern 86 bevorzugt alle oder teilweise auch im Öffnungskolben 51 angeordnet werden. Darüber hinaus verhindern die Zugstangen 81-84 ein Verdrehen von Dämpfungskolben 46 und Öffnungskolben 51 zueinander.

Ferner kann die Kolbenbaugruppe 94 gemäß dem dritten Ausführungsbeispiel auch zusammen mit der ersten Druckfeder 45 und/oder der zweiten Druckfeder 52 bevorzugt angewendet werden. Ein besonderer Anwendungsfall ergibt sich beispielsweise bei sehr schweren Brandschutztüren. Die für den Brandfall benötigte Schließkraft bedingt sehr starke Schließerfedern 56. So ist es für das alltägliche Begehen der Türe wünschenswert, dass die Schließerfeder 56 stets vorgespannt bleibt und beispielsweise im Brandfall die Türe schließt. Nichtsdestotrotz besteht der Bedarf nach einer leichtgängigen und selbstständig schließenden Türe, wobei dieses leichte Schließen nach jeder Begehung erfolgen sollte. Deshalb ist es bevorzugt, dass man in jedem den hier vorgestellten Türschließer 41 die zweite Druckfeder 52 als "zusätzliche Schließerfeder", ausgelegt nach z.B. EN1 oder EN2, ausführt, wobei diese zusätzlicher Schließerfeder bzw. zweite Druckfeder 52 sehr viel schwächer ist als die Schließerfeder 56. Die zweite Druckfeder 52 in dieser Ausführungsvariante belastet somit selbst im Freilauf und bei blockierter Schließerfeder 56 die Kolbenbaugruppe 94, insbesondere den Öffnungskolben 51, stets in Schließrichtung, sodass die Tür selbst bei Freilauf, zumindest bei nicht so großem Widerstand, selbsttätig schließt. Der Begeher muss aber trotz allem nicht bei jedem Öffnungsvorgang die große Schließerfeder 56, sondern nur die sehr leicht ausgeführte zweite Druckfeder 52 spannen. Insbesondere bei dieser Ausführungsvariante kann bevorzugt die Kolbenbaugruppe 94 gemäß den Fig. 9 und 10 nach dem dritten Ausführungsbeispiel mit der zweiten Druckfeder 52 kombiniert werden.

Fig. 11 zeigt einen Türschließer nach einem vierten Ausführungsbeispiel. Gleiche bzw. funktional gleiche Bauteile sind in allen Ausführungsbeispielen mit den gleichen Bezugszeichen versehen. Die im Rahmen des siebten Ausführungsbeispiels vorgestellte Anordnung zur Vermeidung einer sogenannten Rückfederung des Schließerfederspannkolbens 55 kann bevorzugt in allen hier vorgestellten Ausführungsbeispielen des Türschließers 41 angewandt werden.

Fig. 11 zeigt eine Ausbildung des dritten Rückschlagventils 68 im Schließerfederspannkolben 55 als federbelastetes Rückschlagventil. Der Raum innerhalb des Türschließergehäuses 42, insbesondere innerhalb des zweiten Türschließergehäuseteils 44, in welchem sich die Schließerfeder 56 befindet, wird hier als Schließerfederaufnahmeraum 92 bezeichnet. Dieser Schließerfederaufnahmeraum 92 ist ein Raum, welcher sich während des Öffnungsvorgangs der Türe verkleinert, da sich der Schließerfederspannkolben 55 nach rechts bewegt. Darüber hinaus zeigt Fig. 19 das vierte Rückschlagventil 69 ebenfalls als federbelastetes Rückschlagventil. Das dritte Rückschlagventil sperrt Hydraulikfluss aus dem Sperrraum 61 in den Schließerfederaufnahmeraum 92. Das vierte Rückschlagventil sperrt Hydraulikfluss aus dem Schließerfederaufnahmeraum 92 in die Tankleitung T.

Der Schließfederaufnahmeraum 92 und der Tankraum 31 sind hier ein Raum mit hydraulischem Verbund. Die in der Einstelleinheit 57 dargestellte Abstützscheibe für die Feder 56 ist keine hydraulische Abtrennwand.Bei dem Druckaufbau im Sperrraum 61 werden alle dort enthaltenen elastischen Elemente, wie beispielsweise Dichtungen, Restluft oder auch das Hydraulikfluid selbst entsprechend komprimiert, was einen unerwünschten Volumenverlust nach sich zieht. Der Federspannkolben 55 gleicht diesen Volumenverlust aus, macht dabei aber einen geringen Folgehub. Letztendlich arretiert der Schließerfederspannkolben 55 nicht exakt an der gewünschten Stelle. Die in Fig. 19 dargestellte Anordnung reduziert diese Rückfederung, indem während des Öffnungsvorgangs aus dem Schließerfederaufnahmeraum 92 aktiv unter Vordruck gesetztes Hydrauliköl über das dritte Rückschlagventil 68 in den Sperrraum 61 umgepumpt wird. Es wird damit bewusst ein relativer Öffnungswiderstand ähnlich einer Öffnungsdämpfung erzeugt, um das Hydrauliköl vorzuspannen und somit Setzungsverhalten vorzuholen. Dank des vierten Rückschlagventils 69 kann das Hydrauliköl aus dem Schließerfederaufnahmeraum 92 nicht in Richtung der Tankleitung T entweichen. Das Hydrauliköl wird somit während des Öffnungsvorgangs im Schließerfederaufnahmeraum 92 durch den Schließerfederspannkolben 55 unter Vorspannung gebracht und strömt mit einem gewissen Vordruck in den Sperrraum 61. Dadurch wird die unerwünschte Rückfederung deutlich reduziert.

Ferner sind erfindungsgemäß folgende Gegenstände und bevorzugte Ausprägungen vorgesehen:
Bevorzugt ist vorgesehen, dass die Freilaufanordnung als Verschiebekupplung ausgebildet ist, welche ausschließlich Druckkräfte zwischen der Schließerfeder und der Kolbenbaugruppe überträgt. Für die Freilauffunktion darf keine feste Verbindung zwischen der Schließerfeder und Kolbenbaugruppe bestehen. Bevorzugt wird deshalb eine schiebende Verbindung eingesetzt, die ausschließlich Druckkräfte überträgt.

Vorteilhafterweise ist die Freilaufanordnung zwischen der Kolbenstange und der Kolbenbaugruppe angeordnet. Alternativ bevorzugt befindet sich die Freilaufanordnung in der Kolbenstange oder zwischen der Kolbenstange und der Schließerfeder, insbesondere zwischen der Kolbenstange und dem Schließerfederspannkolben.

Ferner von Vorteil ist es, dass die Freilaufanordnung eine senkrecht zu einer Türschließerlängsachse stehende und fest mit der Kolbenstange verbundene erste Stirnfläche, und eine parallel zur ersten Stirnfläche und fest mit der Kolbenbaugruppe verbundene zweite Stirnfläche umfasst, wobei bei blockierter Schließerfeder die zweite Stirnfläche von der ersten Stirnfläche abhebt und somit entkoppelt. Durch zwei aneinander anliegende und abhebende Stirnflächen kann eine sehr einfache und effektive Freilaufanordnung als Verschiebekupplung realisiert werden.

Vorteilhafterweise ist in der Kolbenbaugruppe eine Tasche ausgebildet, wobei die Kolbenstange beweglich in der Tasche geführt ist. Alternativ kann die Tasche beispielsweise auch im Federspannkolben ausgeführt sein. In einer weiteren Alternative ist die Kolbenstange zweiteilig ausgeführt, wobei dann der eine Teil der Kolbenstange eine sich in Richtung der Türschließerlängsachse öffnende Tasche aufweist und der andere Teil der Kolbenstange in dieser Tasche translatorisch beweglich sitzt.

Vorteilhafterweise umfasst der Türschließer einen im Türschließergehäuse zwischen der Kolbenbaugruppe und der Kolbenstange geführten, fest mit der Kolbenstange verbundenen Zusatzkolben, wobei die erste Stirnfläche am Zusatzkolben ausgebildet ist. Kolbenstange und Zusatzkolben sind fest miteinander verbunden, d.h., sie bewegen sich entlang der Türschließerlängsachse stets gemeinsam.

In vorteilhafter Ausbildung des Zusatzkolbens ist vorgesehen, dass die Verbindung zwischen Kolbenstange und Zusatzkolben um eine erste Achse senkrecht zur Türschließerlängsachse schwenkbar ausgeführt ist. Durch diese schwenkbare Ausführung werden etwaige Kräfte, die nicht linear mit der Türschließerlängsachse verlaufen und somit zur Verklemmung führen könnten, vermieden.

Darüber hinaus ist vorteilhafterweise vorgesehen, dass die Verbindung zwischen Kolbenstange und Schließerfederspannkolben um eine zweite Achse senkrecht zur Türschließerlängsachse und senkrecht zur ersten Achse schwenkbar ausgeführt ist. Auch durch diese schwenkbare Verbindung zwischen Kolbenstange und Schließerfederspannkolben wird ein etwaiges Verklemmen vermieden.

Bei nicht gesperrtem Zustand des Sperrraums kann die Schließerfeder durch ihre Vorspannkraft über die Kolbenstange in direkten Druckkontakt innerhalb der Freilaufkupplung auf die Kolbenbaugruppe einwirken, bzw. in der entgegengesetzten Richtung die Kolbenbaugruppe auf die Kolbenstange einwirken. In diesem Funktionszustand besteht ein normaler Türschließerbetrieb, bei dem manuell die Schließerfeder gespannt wird und nach Freigabe der Tür die Schließerfeder über die Kolbenbaugruppe und die Abtriebswelle die Tür wieder in die Nullposition zurückbewegt. Wird dagegen die Schließerfeder hydraulisch arretiert, beispielsweise durch Bestromen eines Magnetventils, so kann das Hydrauliköl nicht mehr aus dem Sperrraum abfließen. Folglich kann nach einmaligem manuellen Spannen der Schließerfeder die Federkraft nicht mehr auf die Kolbenbaugruppe einwirken. Bei manueller Betätigung der Tür aus der Offenposition zurück in die Schließrichtung hebt die Kolbenstange innerhalb der Freilaufanordnung, insbesondere innerhalb der Verschiebekupplung, von der Kolbenbaugruppe ab. Die Kolbenbaugruppe selbst bewegt sich, angetrieben über die Tür und die Abtriebswelle, und führt einen geringen Hubweg aus. Innerhalb der Freilaufanordnung hat sich ein dem Hubweg entsprechender Abstand der ersten Stirnfläche zur zweiten Stirnfläche gebildet. Die Rückbewegung der Kolbenbaugruppe durch ein erneutes Öffnen der Tür erfolgt kraftfrei, was einer Freilauffunktion entspricht. Weitere manuelle Öffnungs- und Schließbewegungen der Tür erfolgen bei weithin gesperrtem Sperrraum beliebig oft und kraftfrei im Freilaufbetrieb. Erst nach Freigeben des Sperrraums kann sich die Schließerfeder wieder in einen entspannten Zustand zurückbewegen. Dabei wird in der Freilaufanordnung die erste Stirnfläche wieder mit der zweiten Stirnfläche in Anlage gebracht und die Kraft der Schließerfeder über die Kolbenbaugruppe und die Abtriebswelle auf die Tür übertragen. Damit wird die Tür sicher durch die gespeicherte Energie ohne zusätzliche manuelle Einwirkung geschlossen.

In bevorzugter Ausführung ist vorgesehen, dass zwischen der Kolbenbaugruppe und der Kolbenstange oder zwischen der Kolbenbaugruppe und dem Zusatzkolben oder zwischen der Kolbenbaugruppe und der Trennwand eine zusätzliche Schließerfeder angeordnet ist, um die Kolbenbaugruppe im Freilauf leicht in Schließrichtung zu belasten, wobei die zusätzliche Schließerfeder schwächer ist als die Schließerfeder. Die Schließerfeder, die die Brandschutzfunktion erfüllt und äußerst stark ausgelegt ist, wird bevorzugt einmal gespannt und dann bis beispielsweise zum Brandfall über den Sperrraum blockiert. Bei der alltäglichen Verwendung der Tür ist es jedoch auch oft wünschenswert, dass die Tür sich nach dem Begehen wieder schließt, wenn auch nicht mit der Kraft einer starken Schließerfeder für den Notfall. Hierzu dient die zusätzliche ausgelegte Schließerfeder. Insbesondere wird diese zusätzliche Schließerfeder nach z.B. EN1 oder EN2 gemäß DIN EN1154 ausgelegt. Es wurde bereits eine sogenannte zweite Druckfeder zum Spielausgleich zwischen der Kurvenrolle des Öffnungskolbens und der Abwälzkontur beschrieben. Diese zweite Druckfeder wird bevorzugt durch die zusätzliche Schließerfeder ersetzt. Alternativ kann auch die Verwendung von kolbenbaugruppeninternen Zugstangen und Spielausgleichsfedern mit der zusätzlichen Schließerfeder kombiniert werden.

Bevorzugt umfasst der Türschließer ein Magnetwegeventil, insbesondere ein 3/2-Magnetwegeventil, wobei auf einer der Kolbenstange abgewandten Seite der Kolbenbaugruppe, insbesondere auf der Seite des Dämpfungskolbens, ein Schließdämpfungsraum zwischen dem Türschließergehäuse und der Kolbenbaugruppe ausgebildet ist. Das Magnetventil steuert zumindest die Drücke im Schließdämpfungsraum und im Sperrraum. Dieses Magnetwegeventil ermöglicht es, den Sperrraum hydraulisch abzudichten. Dadurch kann sich die einmal vorgespannte Schließerfeder nicht mehr entspannen und die Freilauffunktion des Türschließers ist aktiviert. Durch ein Schalten des Magnetwegeventils wird der Sperrraum wieder druckentlastet und die Schließerfeder kann, beispielsweise im Brandfall, die Kolbenbaugruppe verschieben und somit über die Abtriebswelle die Tür schließen.

In bevorzugter Ausführung ist vorgesehen, dass vom Sperrraum eine erste hydraulische Leitung, insbesondere eine Druckleitung P, zum Magnetwegeventil führt, vom Schließdämpfungsraum eine zweite hydraulische Leitung, insbesondere eine Arbeitsleitung A, zum Magnetwegeventil führt, und vom Magnetwegeventil eine dritte hydraulische Leitung, insbesondere Tankleitung T, zu einem Tankraum führt. Die hydraulischen Leitungen erstrecken sich bevorzugt im Wesentlichen parallel zur Türschließerlängsachse und sind in das Gehäuse des Türschließers integriert.

In vorteilhafter Ausführung ist ein Öffnungsdämpfungsraum zwischen der Kolbenbaugruppe und der Trennwand und/oder zwischen der Kolbenbaugruppe und dem Zusatzkolben ausgebildet. Dabei befindet sich eine erste gedrosselte Verbindung zwischen dem Öffnungsdämpfungsraum und dem Tankraum. Der Zusatzkolben kann durchbrochen sein oder muss nicht dicht im Türschließergehäuse geführt sein, sodass sich der Öffnungsdämpfungsraum auf die Räume zwischen Kolbenbaugruppe und Zusatzkolben und zwischen Zusatzkolben und Trennwand erstreckt. Beim Öffnen der Tür verdrängt die Kolbenbaugruppe Hydrauliköl aus dem Öffnungsdämpfungsraum. Das Hydrauliköl fließt über die erste gedrosselte Verbindung, und insbesondere über die dritte Leitung, in den Tankraum.

In bevorzugter Ausführung des Öffnungsdämpfungsraums ist vorgesehen, dass eine erste ungedrosselte Verbindung zwischen dem Öffnungsdämpfungsraum und dem Tankraum angeordnet ist, wobei die erste gedrosselte Verbindung stets offen ist und die erste ungedrosselte Verbindung je nach Stellung der Kolbenbaugruppe durch die Kolbenbaugruppe verschlossen oder offen ist. Die erste ungedrosselte Verbindung tritt bevorzugt zwischen der ersten gedrosselten Verbindung und der Abtriebswelle in den Öffnungsdämpfungsraum ein. Dadurch kann das Hydrauliköl zu Beginn des Öffnungsvorgangs der Tür über die erste ungedrosselte Verbindung in den Tankraum abfließen. Infolgedessen ist die Tür zu Beginn des Öffnungsvorgangs sehr leicht und widerstandsfrei zu öffnen. Ab einem bestimmten Öffnungswinkel verschließt die Kolbenbaugruppe, insbesondere der Öffnungskolben, die erste ungedrosselte Verbindung. Infolgedessen kann das Hydrauliköl nur noch über die erste gedrosselte Verbindung in den Tankraum abfließen und die Tür wird kurz vor Erreichen ihrer Endlage bei der Öffnung gedämpft.

Bevorzugt umfasst der Türschließer eine weitere gedrosselte Verbindung, welche zwischen dem Schließdämpfungsraum und dem Tankraum, insbesondere in der dritten Leitung, angeordnet ist. Diese weitere gedrosselte Verbindung dient zur Dämpfung der Tür in Schließrichtung.

In bevorzugter Ausführung ist vorgesehen, dass das Magnetwegeventil in einer ersten Schaltstellung die erste Leitung mit der dritten Leitung verbindet und die zweite Leitung blockiert, in einer zweiten Schaltstellung wird die zweite Leitung mit der dritten Leitung verbunden und die erste Leitung blockiert. Dadurch ist in der ersten Schaltstellung die Druckleitung P und somit der Sperrraum mit der Tankleitung T verbunden. Die Arbeitsleitung A und somit der Schließdämpfungsraum sind blockiert. In dieser Schaltstellung ist die Schließerfeder bzw. der Schließerfederspannkolben nicht blockiert und die Freilauffunktion deaktiviert. Durch Blockieren der Arbeitsleitung A kann Hydrauliköl aus dem Schließdämpfungsraum nur noch über die weitere gedrosselte Verbindung in den Tankraum abfließen und der Schließvorgang der Tür ist somit stets gedämpft. In der zweiten Schaltstellung wird die Druckleitung P des Sperrraumes blockiert und die Arbeitsteilung A des Schließdämpfungsraumes mit der Tankleitung verbunden. Dadurch ist die Schließerfeder hydraulisch arretiert und die Freilauffunktion aktiviert. Die Schließerfeder kann in dieser Schaltstellung keine Kraft auf die Kolbenbaugruppe übertragen. Gleichzeitig wird die Schließerdämpfung deaktiviert und die Kolbenbaugruppe ist somit freu beweglich und die Tür kann ohne großen Kraftaufwand bewegt werden. Diese Ausführung der hydraulischen Steuerung stellt die bevorzugte Ausführungsform dar.

In einer alternativen hydraulischen Steuerung ist vorgesehen, dass das Magnetventil in einer ersten Schaltstellung die erste Leitung mit der zweiten Leitung verbindet, und in einer zweiten Schaltstellung die zweite Leitung mit der dritten Leitung verbindet und die erste Leitung blockiert. In der ersten Schaltstellung wird somit die Druckleitung P des Sperrraumes mit der Arbeitsleitung A des Schließdämpfungsraums verbunden. In dieser Schaltstellung entspannt sich die Schließerfeder und verdrängt das Hydrauliköl aus dem Sperrraum. Durch die erste Schaltstellung wird der Sperrraum auf das gleiche Druckniveau wie der Schließdämpfungsraum gesetzt. Durch diese Addition der verdrängten Ölvolumen wird eine sehr funktionssichere Regulierung der Schließgeschwindigkeit erreicht. Das Öl beider Räume, des Sperrraums und des Schließdämpfungsraums, fließt gemeinsam über die weitere gedrosselte Verbindung des Schließdämpfungsraumes in den Tankraum ab. In der zweiten Schaltstellung ist die Druckleitung P des Sperrraumes blockiert, wodurch wieder die Freilauffunktion aktiviert wird. Die Arbeitsleitung A des Schließdämpfungsraumes ist mit der Tankleitung verbunden, wodurch die Schließdämpfung im Freilauf deaktiviert ist.

In vorteilhafter Ausführung ist vorgesehen, dass das Magnetventil im unbestromten Zustand die Schließerfeder freigibt und im bestromten Zustand den Freilauf ermöglicht. Für eine dauerhafte Beibehaltung der Freilauffunktion muss das Magnetventil stets bestromt bleiben. Durch dieses Ruhestromprinzip wird sichergestellt, dass bei Stromausfall die Tür mittels der in der Schließerfeder gespeicherten Energie immer sicher schließt. Die Schließfunktion hat für den Notfall immer Priorität und ist gesetzlich bzw. von Normen vorgeschrieben.

Vorteilhafterweise ist vorgesehen, dass ein federbelastetes Rückschlagventil zwischen dem Sperrraum und einem sich während des Öffnungsvorgangs der Tür verkleinernden Raum angeordnet ist. Dieser sich während des Öffnungsvorgangs verkleinernde Raum ist insbesondere der Aufnahmeraum für die Schließerfeder. Das federbelastete Rückschlagventil sperrt in Richtung des sich verkleinernden Raums. Im Sperrraum wird erfindungsgemäß ein hydraulischer Druck aufgebaut und gehalten, um somit die Schließerfeder zu arretieren. Zum Druckaufbau im Sperrraum werden alle enthaltenen, elastischen Elemente, wie zum Beispiel Dichtungen, Restluft oder auch das Hydrauliköl selbst, entsprechend komprimiert. Dies zieht einen unerwünschten Volumenverlust nach sich. Der Schließerfederspannkolben gleicht diesen Volumenverlust zwar aus, macht dabei aber einen geringen Folgehub. Dieser Folgehub überträgt sich auf die Kolbenstange und somit auf die Kolbenbaugruppe, die Abtriebswelle und die Tür. Dies führt zu einer Rückdrehung der Tür um einige Winkelgrade. Die Tür kann während des Freilaufes dadurch nicht mehr vollständig bis zur gewünschten Position geöffnet werden. Diesen unerwünschten Effekt nennt man Rückfederung, welcher sich insbesondere bei begrenztem Türöffnungswinkel, vorgegeben durch bauliche Gegebenheiten, bemerkbar macht. Dieser Effekt ist insbesondere bei Türschließern mit Nockentechnologie aufgrund des geringen Drehwinkel-Hub-Verhältnisses stark ausgeprägt. Die hier vorgestellte Anordnung mit dem federbelasteten Rückschlagventil reduziert diese Rückfederung, indem während des Öffnungsvorganges aus einem sich in Öffnungsrichtung verkleinernden Druckraum aktiv unter Vordruck gesetztes Hydrauliköl über das Rückschlagventil in den Sperrraum umgepumpt wird. Es wird dabei bewusst ein relativer Öffnungswiderstand ähnlich einer Öffnungsdämpfung erzeugt, um das Hydrauliköl vorzuspannen und Setzungsverhalten vorzuholen. Bei vorbekannten Anordnungen wird während des Öffnungsvorgangs das Hydrauliköl nur passiv aus einem Tankraum in Druckräume angesaugt, was teilweise sogar geringen Unterdruck bewirken kann. Die elastischen Elemente entspannen sich damit vollständig und benötigen wieder ein relativ hohes Ausgleichsvolumen mit entsprechendem Folgehub, um wieder einen für die Federkraft ausreichenden Haltedruck zu ermöglichen. Dabei besteht eine maximale Druckdifferenz. Im hier beschriebenen Fall erfolgt das Setzungsverhalten der elastischen Elemente im Sperrraum deshalb unter einer geringen Druckdifferenz, wodurch der Volumenverlust und damit der Folgehub geringer ausfällt. Entsprechend ist die Rückdrehung bzw. die Rückfederung der Kolbenbaugruppe aus der beabsichtigten Stellung deutlich geringer.

Bevorzugt ist das Rückschlagventil so angeordnet, dass Hydrauliköl im sich verkleinernden Raum durch den Öffnungsvorgang unter Vordruck gesetzt wird und so aktiv durch das Rückschlagventil hindurch in den Sperrraum umgepumpt wird.

Vorteilhafterweise ist das Rückschlagventil im Schließerfederspannkolben angeordnet.

Ferner ist es von Vorteil, dass der sich verkleinernde Raum während des Öffnungsvorgangs mit Ausnahme des Rückschlagventils verschlossen ist.

Insbesondere wird dieses Verschließen dadurch erreicht, dass ein weiteres Rückschlagventil zwischen dem sich verkleinernden Raum und der Tankleitung angeordnet ist, wobei das weitere Rückschlagventil in Richtung der Tankleitung sperrt. Dadurch wird beispielsweise im Aufnahmeraum der Schließerfeder befindliches Hydrauliköl während des Öffnungsvorgangs vorgespannt und kann über das federbelastete Rückschlagventil im Schließerfederspannkolben in den Sperrraum umgepumpt werden.

Die Erfindung umfasst des Weiteren ein hydraulisches Magnetwegeventil, insbesondere ein hydraulisches 3/2-Magnetwegeventil, umfassend ein Ventilgehäuse, einen Elektromagneten und einen Ventilstößel. In das Gehäuse ist eine Ventilkammer integriert. Diese Ventilkammer umfasst eine erste Ventilsitzbohrung als Verbindung zu einer ersten Leitung, insbesondere Druckleitung, eine zweite Ventilsitzbohrung als Verbindung zu einer zweiten Leitung, insbesondere Arbeitsleitung, und eine freie Öffnung zu einer dritten Leitung, insbesondere Tankleitung. Die Öffnung wird als "frei" bezeichnet, da sie in jeder Schaltstellung des Ventils die Ventilkammer mit der dritten Leitung verbindet. Der Ventilstößel ist zumindest teilweise innerhalb der Ventilkammer angeordnet und wird durch den Elektromagneten linear bewegt. Des Weiteren umfasst der Ventilstößel innerhalb der Ventilkammer eine der ersten Ventilsitzbohrung zugewandte erste Dichtfläche und eine der zweiten Ventilsitzbohrung zugewandte zweite Dichtfläche, sodass wahlweise die erste Ventilsitzbohrung oder die zweite Ventilsitzbohrung verschließbar ist. Des Weiteren erstreckt sich der Ventilstößel aus der Ventilkammer hinaus durch die zweite Ventilsitzbohrung und durch die zweite Leitung hindurch zum Elektromagneten. Dadurch, dass sich der Ventilstößel aus der Ventilkammer hinaus erstreckt, kann der Ventilstößel mit dem Elektromagneten verbunden bzw. teilweise in den Elektromagneten integriert werden. Bei geschlossener zweiter Ventilsitzbohrung wird über ein Differenzflächenverhältnis der Ventilstößel durch den Druck der zweiten Leitung, insbesondere Arbeitsleitung, in die zweite Ventilsitzbohrung gezogen. Diese Anordnung mit Differenzflächenverhältnis begünstigt die leckölfreie Abdichtung der zweiten Ventilsitzbohrung.

Dieses Differenzflächenverhältnis wird insbesondere dadurch erreicht, dass ein Dichtdurchmesser des Ventilstößels außerhalb der Ventilkammer größer ist als ein Durchmesser der zweiten Ventilsitzbohrung. Der Dichtdurchmesser ist dabei an einer Dichtung zwischen Ventilstößel und Elektromagnet definiert.

Bevorzugt wird das Differenzflächenverhältnis erreicht, indem der Durchmesser des Ventilstößels außerhalb der Ventilkammer größer ausgeführt wird als der Bohrungsdurchmesser der zweiten Ventilsitzbohrung. Dadurch kann der Druck der zweiten Leitung vor der Ventilkammer bei einer geschlossenen zweiten Ventilsitzbohrung die Kraft der Druckfeder unterstützen und die zweite Dichtfläche in die zweite Ventilsitzbohrung ziehen.

In einer weiteren bevorzugten Ausbildung ist der Ventilstößel zumindest zweiteilig ausgebildet. Hierzu umfasst der Ventilstößel einen ersten Teil und einen zweiten Teil, wobei der erste Teil linear beweglich im Elektromagneten geführt ist und der zweite Teil in den ersten Teil eingeschraubt ist. Dadurch ist der zweite Teil fest mit dem ersten Teil verbunden und zusammen mit dem ersten Teil linear beweglich. Insbesondere zur Ausbildung des Differenzflächenverhältnisses ist diese zweiteilige Ausführung des Ventilstößels besonders montagefreundlich. Dadurch kann insbesondere der Dichtdurchmesser größer ausgeführt werden als der Bohrungsdurchmesser der zweiten Ventilsitzbohrung.

Des Weiteren ist es bevorzugt vorgesehen, dass zwischen dem Ventilstößel und einem Ankerraum des Elektromagneten eine Dichtung, insbesondere eine Nutringdichtung, angeordnet ist. Diese Dichtung befindet sich am bereits diskutierten Dichtdurchmesser zwischen Ventilstößel und Elektromagnet. Besonders bevorzugt ist der Ankerraum über einen durch den Ventilstößel hindurch verlaufenden Verbindungskanal stets mit der dritten Leitung, insbesondere Tankleitung, frei verbunden. Dadurch wird ein Druckaufbau im Ankerraum bei möglichen Leckagen dieser Nutringdichtung vermieden. Der Verbindungskanal innerhalb des Ventilstößels verläuft vom Ankerraum durch den Ventilstößel hindurch in die Ventilkammer. Wie bereits beschrieben, ist die Ventilkammer stets frei mit der dritten Leitung, insbesondere Tankleitung, verbunden.

Alternativ zu dem zuerst beschriebenen hydraulischen Magnetventil umfasst die Erfindung ein hydraulisches Magnetventil, insbesondere hydraulisches 3/2-Magnetventil, umfassend ein Ventilgehäuse, eine in das Ventilgehäuse integrierte Ventilkammer mit einer ersten Ventilsitzbohrung als Verbindung zu einer ersten Leitung, insbesondere Druckleitung, einer freien Öffnung zu einer zweiten Leitung, insbesondere Arbeitsleitung, und einer zweiten Ventilsitzbohrung als Verbindung zu einer dritten Leitung, insbesondere Tankleitung. Ferner umfasst dieses hydraulische Magnetwegeventil einen Elektromagneten und einen durch den Elektromagneten bewegbaren und teilweise in der Ventilkammer angeordneten Ventilstößel. Der Ventilstößel umfasst dabei innerhalb der Ventilkammer eine der ersten Ventilsitzbohrung zugewandte erste Dichtfläche und eine der zweiten Ventilsitzbohrung zugewandte zweite Dichtfläche, sodass wahlweise die erste Ventilsitzbohrung oder die zweite Ventilsitzbohrung verschließbar ist. Ferner erstreckt sich der Ventilstößel aus der Ventilkammer hinaus durch die zweite Ventilsitzbohrung hindurch zum Elektromagneten.

In bevorzugter Ausführung des alternativen hydraulischen Magnetwegventils ist vorgesehen, dass am Ventilstößel entlang oder im Ventilstößel eine Verbindung der dritten Leitung zu einem Ankerraum des Elektromagneten besteht, sodass ein Druckaufbau im Ankerraum vermieden wird. Insbesondere wird diese Verbindung dadurch realisiert, dass eine plane Fläche am Ventilstößel ausgeführt ist, oder dass der Ventilstößel als Mehrkant, insbesondere Sechskant, gefertigt ist.

Im Folgenden werden vorteilhafte Ausgestaltungen der beiden erfindungsgemäßen hydraulischen Magnetwegeventile beschrieben:
In bevorzugter Ausführung ist vorgesehen, dass ein Durchmesser der ersten Ventilsitzbohrung kleiner ist als ein Durchmesser der zweiten Ventilsitzbohrung.

In bevorzugter Ausführung ist zwischen der ersten Ventilsitzbohrung und dem Ventilstößel eine Druckfeder angeordnet. Das erfindungsgemäße Ventil kann somit in der Variante mit Kugel als federbelastetes Kugel-Kegel-Sitzventil bezeichnet werden.

In einer weiteren vorteilhaften Ausgestaltung ist vorgesehen, dass im unbestromten Zustand des Elektromagneten die zweite Dichtfläche, insbesondere Kegelfläche, die zweite Ventilsitzbohrung abdichtet, und dass im bestromten Zustand des Elektromagneten die erste Dichtfläche, insbesondere konvexe Oberfläche, die erste Ventilsitzbohrung abdichtet. Die bevorzugt vorgesehene Druckfeder dient dazu, dass im unbestromten Zustand die zweite Dichtfläche des Ventilstößels in die zweite Ventilsitzbohrung gedrückt wird.

Bevorzugt umfasst die erste Dichtfläche eine konvexe Oberfläche, insbesondere Kugel. Ferner bevorzugt umfasst die zweite Dichtfläche eine Kegelfläche, insbesondere eine Kegelringfläche. Durch lineares Verschieben bzw. Bewegen des Ventilstößels wird wahlweise die erste Ventilsitzbohrung mit der konvexen Oberfläche oder die zweite Ventilsitzbohrung mit der Kegelfläche verschlossen. Ein Klemmen oder Hängenbleiben in der Schaltstellung unter Druck wird durch die Kugelventilausführung mit der konvexen Oberfläche wirksam vermieden.

Ferner umfasst die Erfindung bevorzugt einen Filter, insbesondere in der ersten Leitung. Besonders bevorzugt wird der Filter außerhalb der Ventilkammer direkt vor dem Einlauf in die erste Ventilsitzbohrung angeordnet. Der Filter verhindert eine Verschmutzung des Öls und insbesondere eine Verschmutzung der beiden Ventilsitze. In einer weiteren bevorzugten Ausführung liegt die erste Ventilsitzbohrung direkt gegenüber der zweiten Ventilsitzbohrung. In bevorzugter Ausführung umfasst der Elektromagnet eine Spule, einen Anker, einen Polkern sowie einen Spalt zwischen Polkern und Anker. Der Polkern umfasst eine Bohrung entlang der Längsachse des Ventilstößels und bietet somit eine Aufnahme und eine lineare Führung für den Ventilstößel. Des Weiteren bevorzugt umfassen die erfindungsgemäßen Magnetwegeventile eine Steuerung/Regelung für den Elektromagneten. Mit dieser Steuerung/Regelung kann der Elektromagnet bestromt und unbestromt geschaltet werden.

Ferner umfasst die Erfindung ein hydraulisches Cartridge-Magnet-wegeventil, insbesondere hydraulisches Cartridge-3/2-Magnetwegeventil, umfassend eines der soeben vorgestellten hydraulischen Magnetwegeventile, wobei das Gehäuse zum zumindest teilweisen Einführen in eine Ventilaufnahme ausgebildet ist. Diese Ventilaufnahme befindet sich in einem Bauteil, welches das Cartridge-3/2-Magnetwegeventil integral aufnimmt. Besonders bevorzugt werden die erste Leitung, insbesondere Druckleitung, und die zweite Leitung, insbesondere Arbeitsleitung, bezüglich der Längsachse des Ventilstößels radial bzw. senkrecht nach außen geführt. Des Weiteren befinden sich bevorzugt O-Ring-Dichtungen seitlich der nach außen geführten ersten und zweiten Leitungen auf der Oberfläche des Ventilgehäuses, sodass durch Einführen des Cartridge-Gehäuses diese Leitungen druckdicht angeschlossen werden können. Besonders bevorzugt umfasst das Ventilgehäuse hierzu in Umfangsrichtung verlaufende Ringkanäle. Von diesen Ringkanälen aus können bevorzugt mehrere radial gerichtete Kanäle für die erste Leitung und/oder mehrere radial gerichtete Kanäle für die zweite Leitung zur Ventilkammer führen.

Ferner ist es bevorzugt, dass das hydraulische Cartridge-Magnet-wegeventil eine Volumenausgleichseinheit mit Tankraum umfasst. Diese Volumenausgleichseinheit mit Tankraum ist in das Ventilgehäuse integriert oder ist an das Ventilgehäuse angeflanscht. Der Tankraum ist bevorzugt mit der dritten Leitung verbunden. Das Ventil baut sich dabei bevorzugt entlang der Längsachse des Ventilstößels wie folgt auf: Die Ventilkammer mit Ventilstößel ist mittig angeordnet. Auf der einen Seite der Kammer ist die Volumenausgleichseinheit mit Tankraum integriert oder angeflanscht. Auf der anderen Seite der Ventilkammer wird der Elektromagnet montiert. Dadurch kann das hydraulische Cartridge-Magnetwegeventil mit der Volumenausgleichseinheit voran in ein Bauteil eingeschoben werden. Der Elektromagnet und insbesondere ein Stecker am Elektromagnet ragen dabei bevorzugt aus dem Bauteil hervor. In bevorzugter Ausbildung ist der Tankraum der Volumenausgleichseinheit mittels eines Volumenausgleichskolbens und einer Ausgleichsfeder bzw. Druckfeder leicht druckbelastet.

Des Weiteren umfasst die Erfindung einen Türschließer, insbesondere einen Drehtürschließer, mit Freilauffunktion, umfassend eines der soeben beschriebenen hydraulischen Magnetventile oder eines der hydraulischen Cartridge-Magnetventile, wobei die Ventilaufnahme im Türschließer ausgebildet ist. Das hydraulische Magnetventil oder Cartridge-Magnet-ventil ist somit in das Gehäuse des Türschließers integriert oder angeflanscht und dient zur Steuerung der Hydraulik zwischen dem Schließdämpfungsraum, dem Sperrraum und dem Tankraum bzw. der Tankleitung.

Der Türschließer mit dem hydraulischen Magnetwegeventil umfasst bevorzugt des Weiteren ein Türschließergehäuse, eine mit einer Tür verbindbare Abtriebswelle, eine mit der Abtriebswelle verbundene und im Türschließergehäuse geführte Kolbenbaugruppe, eine Schließerfeder, eine zur Verbindung der Kolbenbaugruppe mit der Schließerfeder angeordnete Kolbenstange, eine Freilaufanordnung, welche dazu ausgebildet ist, eine translatorische Bewegung der Kolbenbaugruppen entkoppelt von der Schließerfeder bei blockierter Schließerfeder zu ermöglichen, und einen zum Blockieren der Schließerfeder ausgebildeten hydraulischen Sperrraum.

Die vorab beschriebenen vorteilhaften Ausgestaltungen des erfindungsgemäßen Türschließers finden entsprechende vorteilhafte Anwendung auf den Türschließer mit dem hydraulischen Magnetwegeventil bzw. dem hydraulischen Cartridge-Magnetwegeventil.

### Bezugszeichenliste

- 1: 3/2-Magnetwegeventil
- 2: Ventilgehäuse
- 3: Ventilkammer
- 4: Elektromagnet
- 5: Ventilstößel
- 6, 7: Ventilsitzbohrungen
- 8: freie Öffnung
- 9: konvexe Oberfläche
- 10: Kugel
- 11: Kegelringfläche
- 12: erster Teil
- 13: zweiter Teil
- 14: Ventildruckfeder
- 15: Verbindungskanal
- 16: Spule
- 17: Anker
- 18: Polkern
- 19: lineare Führung
- 20: Spalt
- 21: Anschlussleitung
- 22: Ankerraum
- 23: Hülse
- 24: Isolierung
- 25: Nutringdichtung
- 26: Basisgehäuseteil
- 27: erster Ventilkammereinsatz
- 28: zweiter Ventilkammereinsatz
- 29: Fortsatz
- 30: Kappe
- 31: Tankraum
- 32: Volumenausgleichskolben
- 33: Ausgleichsfeder
- 34: Federlager
- 35: gebohrter Einsatz
- 36: Filter
- 37: Volumenausgleichseinheit
- 38: Ventillängsachse
- 39: Ringkanäle
- 40: O-Ringabdichtungen
- 41: Türschließer
- 42: Türschließergehäuse
- 43: erstes Türschließergehäuseteil
- 44: zweites Türschließergehäuseteil
- 45: erste Druckfeder
- 46: Dämpfungskolben
- 47: erste Kurvenrolle
- 48: Abtriebswelle, ausgebildet als Nockenwelle
- 49: Abwälzkontur
- 50: zweite Kurvenrolle
- 51: Öffnungskolben
- 52: zweite Druckfeder
- 53: Gehäusetrennwand
- 54: Kolbenstange
- 55: Schließerfederspannkolben
- 56: Schließerfeder
- 57: Einstelleinheit für die Schließerfedervorspannung
- 58: Schließdämpfungsraum
- 59: Kolbenbaugruppeninnenraum, insb. Nockenwellenraum
- 60: Öffnungsdämpfungsraum
- 61: Sperrraum
- 62: Türschließerlängsachse
- 63: zweites Drosselventil
- 64: drittes Drosselventil
- 65: erstes Drosselventil
- 66: erstes Rückschlagventil
- 67: zweites Rückschlagventil
- 68: drittes Rückschlagventil
- 69: viertes Rückschlagventil
- 70: Gleitringdichtung
- 71: Tasche
- 72: zweite Stirnfläche, insb. Taschenboden
- 73: Kolbenführung
- 74: erste Stirnfläche
- 75: zweite gedrosselte Verbindung
- 76: dritte gedrosselte Verbindung
- 77: erste ungedrosselte Verbindung
- 78: erste gedrosselte Verbindung
- 79: erste Achse
- 80: zweite Achse
- 81: erste Zugstange
- 82: zweite Zugstange
- 83: dritte Zugstange
- 84: vierte Zugstange
- 85: Abtriebsachse
- 86: integrierte Spielausgleichsfedern
- 87: Verschraubung
- 88: Federspannmuttern
- 89: erster Abdichtungsflansch
- 90: zweiter Abdichtungsflansch
- 91: Höhe der Abwälzkontur
- 92: Schließerfederaufnahmeraum
- 93: Absatz
- 94: Kolbenbaugruppe
- 95: Zusatzkolben
- P: erste Leitung, insb. Druckleitung
- A: zweite Leitung, insb. Arbeitsleitung
- T: dritte Leitung, insb. Tankleitung

## Patentansprüche

1. Türschließer (41), insbesondere Drehtürschließer, umfassend
ein Türschließergehäuse (42),
eine mit einer Tür verbindbare Abtriebswelle (48),
eine mit der Abtriebswelle (48) verbundene und im Türschließergehäuse (42) geführte Kolbenbaugruppe (94),
eine Schließerfeder (56),
eine zur Verbindung der Kolbenbaugruppe (94) mit der Schließerfeder (56) angeordnete Kolbenstange (54),
eine Freilaufanordnung, welche dazu ausgebildet ist eine translatorische Bewegung der Kolbenbaugruppe (94) entkoppelt von der Schließerfeder (56) bei blockierter Schließerfeder (56) zu ermöglichen, wobei die Freilaufanordnung als Verschiebekupplung ausgebildet ist, welche ausschließlich Druckkräfte zwischen der Schließerfeder (56) und der Kolbenbaugruppe (94) überträgt, und
einen zum Blockieren der Schließerfeder (56) ausgebildeten hydraulischen Sperrraum (61),
wobei die Abtriebswelle (48) eine nockenförmige Abwälzkontur (49), insbesondere Nockenscheibe, umfasst, und die Kolbenbaugruppe (94) zumindest eine auf der Abwälzkontur (49) anliegende Kurvenrolle (47, 50) umfasst,
**dadurch gekennzeichnet, dass** die Kolbenbaugruppe (94) einen Dämpfungskolben (46) mit einer ersten Kurvenrolle (47) und einen Öffnungskolben (51) mit einer zweiten Kurvenrolle (50) umfasst, wobei die Abtriebswelle (48) zwischen dem Dämpfungskolben (46) und dem Öffnungskolben (51) angeordnet ist, und wobei
der Dämpfungskolben (46) und der Öffnungskolben (51) über vier Zugstangen (81-84) miteinander verbunden sind.

2. Türschließer nach Anspruch 1, **gekennzeichnet durch** eine im Türschließergehäuse (42) zwischen der Kolbenbaugruppe (94) und der Schließerfeder (56) angeordnete fluiddichte Trennwand (53), wobei die Kolbenstange (54) fluiddicht **durch** die Trennwand (53) verläuft.

3. Türschließer nach einem der vorhergehenden Ansprüche, **gekennzeichnet durch** einen im Türschließergehäuse (42) geführten und an der Schließerfeder (56) anliegenden Schließerfederspannkolben (55).

4. Türschließer nach den Ansprüchen 2 und 3, **dadurch gekennzeichnet, dass** zwischen der Trennwand (53) und dem Schließerfederspannkolben (55) der Sperrraum (61) ausgebildet ist.

5. Türschließer nach einem der vorhergehenden Ansprüche, **dadurch gekennzeichnet, dass** jeweils zwei der Zugstangen (81, 83; 82, 84) symmetrisch zur Türschließerlängsachse (62) angeordnet sind.

6. Türschließer nach einem der vorhergehenden Ansprüche, **dadurch gekennzeichnet, dass** zwei Zugstangen (81, 82) oberhalb der Abwälzkontur (49) und beidseitig der Abtriebswelle (48) angeordnet sind, und zwei weitere Zugstangen (83, 84) unterhalb der Abwälzkontur (49) und beidseitig der Abtriebswelle (48) angeordnet sind, sodass die Abwälzkontur (49) mit ihrer vollständigen Höhe (91) zwischen den beiden oberen Zugstangen (81, 82) und den beiden unteren Zugstangen (83, 84) angeordnet ist.

7. Türschließer nach einem der vorhergehenden Ansprüche, **dadurch gekennzeichnet, dass** die Kolbenbaugruppe (94) zumindest zwei integrierte Spielausgleichsfedern (86) umfasst, wobei zumindest zwei diagonal zueinander angeordnete Zugstangen (81, 83; 82, 84) mittels der Spielausgleichsfedern (86) auf Zug federbelastet sind, um ein Spiel zwischen der Abwälzkontur (49) und den Kurvenrollen (47, 50) auszugleichen.

8. Türschließer nach Anspruch 7, **dadurch gekennzeichnet, dass** die Spielausgleichsfedern (86) im Dämpfungskolben (46) und/oder im Öffnungskolben (51) angeordnet sind.

9. Türschließer nach Anspruch 8, **dadurch gekennzeichnet, dass** die Zugstangen (81-84) durch die Spielausgleichsfedern (86) hindurchragen, wobei die Spielausgleichsfedern (86) als Druckfedern ausgebildet sind und gegen die Enden der Zugstangen (81-84) wirken, sodass die Zugstangen (81-84) auf Zug belastet werden.

## Claims

1. A door closer (41), in particular a swing door closer, comprising
a door closer housing (42),
an output shaft (48), which is connectable to a door,
a piston assembly (94), which is connected to the output shaft (48) and guided in the door closer housing (42),
a closer spring (56),
a piston rod (54) arranged for connecting the piston assembly (94) to the closer spring (56),
a freewheeling arrangement, which is configured to allow for a translational movement of the piston assembly (94) uncoupled from the closer spring (56) with the closer spring (56) being blocked, wherein the freewheeling arrangement is configured as a sliding coupling, which exclusively transfers compressive forces between the closer spring (56) and the piston assembly (94), and
a hydraulic blocking space (61), which is configured for blocking the closer spring (56),
wherein the output shaft (48) comprises a camshaped rolling contour (49), in particular a cam disc, and the piston assembly (94) comprises at least one cam follower (47, 50) bearing on the rolling contour (49),
**characterized in that** the piston assembly (94) comprises a dampening piston (46) with a first cam follower (47) and an opening piston (51) with a second cam follower (50), wherein the output shaft (48) is disposed between the dampening piston (46) and the opening piston (51), and
wherein the damping piston (46) and the opening piston (51) are connected to each other by means of four traction rods (81 to 84).

2. The door closer according to claim 1, **characterized by** a fluid-tight separation wall (53), which is disposed in the door closer housing (42) between the piston assembly (94) and the closer spring (56), wherein the piston rod (54) extends through the separation wall (53) in a fluid-tight manner.

3. The door closer according to any of the preceding claims, **characterized by** a closer spring tensioning piston (55) which is guided in the door closer housing (42) and bearing against the closer spring (56).

4. The door closer according to the claims 2 and 3, **characterized in that** the blocking space (61) is formed between the separation wall (53) and the closer spring tensioning piston (56).

5. The door closer according to any of the preceding claims, **characterized in that** respectively two of the traction rods (81, 83; 82, 84) are disposed symmetrically with regard to the longitudinal door closer axis (62).

6. The door closer according to any of the preceding claims, **characterized in that** two traction rods (81, 82) are disposed above the rolling contour (49) and on both sides of the output shaft (48), and two further traction rods (83, 84) are disposed below the rolling contour (49) and on both sides of the output shaft (48) in such a way that the rolling contour (49) with its entire height (91) is disposed between the two upper traction rods (81, 82) and the two lower traction rods (83, 84).

7. The door closer according to any of the preceding claims, **characterized in that** the piston assembly (94) comprises at least two incorporated play compensating springs (86), wherein at least two traction rods (81, 83; 82, 84) which are disposed diagonally with regard to each other, are traction spring loaded by means of the play compensating springs (86), in order to compensate for play between the rolling contour (49) and the cam followers (47, 50).

8. The door closer according to claim 7, **characterized in that** the play compensating springs (86) are disposed in the dampening piston (56) and/or in the opening piston (51).

9. The door closer according to claim 8, **characterized in that** the traction rods (81 to 84) project through the play compensating springs (86), wherein the play compensating springs (86) are configured as compression springs and act against the ends of the traction rods (81 to 84) such that the traction rods (81 to 84) are traction loaded.

## Revendications

1. Ferme-porte (41), en particulier un ferme-porte de porte tournante, comportant
un boîtier de ferme-porte (42),
un arbre de sortie (48) qui peut être connecté à une porte,
un sous-ensemble de pistons (94) qui est connecté à l'arbre de sortie (48) et guidé dans le boîtier de ferme-porte (42),
un ressort de fermeture (56),
une tige de piston (54) qui est agencé pour connecter le sous-ensemble de pistons (94) au ressort de fermeture (56),
un agencement de roue libre, lequel est aménagé à permettre un mouvement translatoire du sous-ensemble de pistons (94) désaccouplé du ressort de fermeture (56) lorsque le ressort de fermeture (56) est bloqué, dans lequel l'agencement de roue libre est aménage comme embrayage coulissant, lequel transmet uniquement des forces de pression entre le ressort de fermeture (56) et le sous-ensemble de pistons (94), et
un espace de blocage hydraulique (61) aménagé pour bloquer le ressort de fermeture (56),
l'arbre de sortie (48) comportant un contour de roulement (49) en forme de came, en particulier un disc à came, et le sous-ensemble de pistons (94) comporte au moins un galet de cames (47, 50) plaqué contre le contour de roulement (49),
**caractérisé en ce que** le sous-ensemble de pistons (94) comporte un piston d'amortissement (46) avec un premier galet de cames (47) et un piston d'ouverture (51) avec un deuxième galet de cames (50), l'arbre de sortie (48) étant agencé entre le piston d'amortissement (46) et le piston d'ouverture (51), et
le piston d'amortissement (46) et le piston d'ouverture (51) étant connectés l'un à l'autre par l'intermédiaire de quatre tiges de traction (81 à 84).

2. Ferme-porte selon la revendication 1, **caractérisé par** une cloison de séparation (53) étanche aux fluides et agencée dans le boîtier de ferme-porte (42) entre le sous-ensemble de pistons (94) et le ressort de fermeture (56), la tige de piston (54) s'étendant de façon étanche aux fluides à travers la cloison de séparation (53).

3. Ferme-porte selon l'une des revendications précédentes, **caractérisé par** un piston tendeur de ressort de fermeture (55) qui est guidé dans le boîtier de ferme-porte (42) et plaqué contre le ressort de fermeture (56).

4. Ferme-porte selon les revendications 2 et 3, **caractérisé en ce que** l'espace de blocage (61) est aménagé entre la cloison de séparation (53) et le piston tendeur de ressort de fermeture (55).

5. Ferme-porte selon l'une des revendications précédentes, **caractérisé en ce que** respectivement deux tiges de traction (81, 83 ; 82, 84) sont agencées symétriquement par rapport à l'axe longitudinal du ferme-porte (62).

6. Ferme-porte selon l'une des revendications précédentes, **caractérisé en ce que** deux tiges de traction (81, 82) sont agencées au-dessus du contour de roulement (49) et des deux côtés de l'arbre de sortie (48), et deux autres tiges de traction (83, 84) sont agencées en-dessous du contour de roulement (49) et des deux côtés de l'arbre de sortie (48) de sorte que le contour de roulement (49) avec toute son hauteur (91) est agencé entre les deux tiges de traction (81, 82) supérieures et les deux tiges de traction (83, 84), inférieures.

7. Ferme-porte selon l'une des revendications précédentes, **caractérisé en ce que** le sous-ensemble de pistons (94) comporte au moins deux ressorts compensateurs de jeu (86) intégrés, au moins deux tiges de traction (81, 83; 82, 84) agencées de façon diagonale l'une par rapport à l'autre étant chargées par traction au moyen des ressorts compensateurs de jeu (86) pour compenser un jeu entre le contour de roulement (49) et les galets de cames (47, 50).

8. Ferme-porte selon la revendication 7, **caractérisé en ce que** les ressorts compensateurs de jeu (86) sont agencés dans le piston d'amortissement (46) et/ou dans le piston d'ouverture (51).

9. Ferme-porte selon la revendication 8, **caractérisé en ce que** les tiges de traction (81 à 84) font saillie à travers les ressorts compensateurs de jeu (86), les ressorts compensateurs de jeu (86) étant aménagés comme ressorts de pression et agissent contre les extrémités des tiges de traction (81 à 84), de façon à charger les tiges de traction (81 à 84) en traction.
